(19) Europäisches Patentamt / European Patent Office / Office européen des brevets

(11) **EP 4 738 858 A1**

(12) **EUROPEAN PATENT APPLICATION**
published in accordance with Art. 153(4) EPC

(43) Date of publication:
06.05.2026  Bulletin 2026/19

(21) Application number: 24846091.7

(22) Date of filing: 26.07.2024

(51) International Patent Classification (IPC):
$H04N\ 23/55^{(2023.01)}$      $H04N\ 23/54^{(2023.01)}$
$H04N\ 23/57^{(2023.01)}$      $G03B\ 17/12^{(2021.01)}$
$G03B\ 30/00^{(2021.01)}$      $G03B\ 9/02^{(2021.01)}$
$G02B\ 13/00^{(2006.01)}$      $G02B\ 3/00^{(2006.01)}$
$G02B\ 1/04^{(2006.01)}$

(52) Cooperative Patent Classification (CPC):
G02B 1/04; G02B 3/00; G02B 13/00; G03B 9/02;
G03B 17/12; G03B 30/00; H04N 23/54;
H04N 23/55; H04N 23/57

(86) International application number:
PCT/KR2024/010958

(87) International publication number:
WO 2025/023790 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.07.2023  KR 20230097761
26.09.2023  KR 20230129059

(71) Applicant: Samsung Electronics Co., Ltd.
Suwon-si, Gyeonggi-do 16677 (KR)

(72) Inventor: KIM, Dongwoo
Suwon-si Gyeonggi-do 16677 (KR)

(74) Representative: HGF
HGF Limited
4th Floor, 1 City Square
Leeds LS1 2ES (GB)

(54) **CAMERA MODULE AND ELECTRONIC DEVICE COMPRISING SAME**

(57)    An electronic device according to one embodiment of the present disclosure may comprise: a lens assembly including a first lens, a second lens, a third lens, and a fourth lens disposed along an optical axis direction toward an upper side from a subject side; and an image sensor disposed to receive the light focused or guided by the lens assembly. The first lens may have positive refractive power. The second lens may have negative refractive power, and the third lens may have positive refractive power. At least one of a subject-side surface and an image-side surface of the second lens (L2S) may have an inflection point.

**Description**

[Technical Field]

Various embodiments of the disclosure relate to, for example, a small-sized camera module and an electronic device including the same.

[Background Art]

Along with the development of information and communication technology and semiconductor technology, the distribution and use of various electronic devices have been rapidly increasing. In particular, recent electronic devices have been developed to be portable and capable of communication. In addition, the electronic devices may output stored information as audio or video. For example, an electronic device (e.g., a laptop computer) may be equipped with entertainment functions such as games, multimedia functions such as music/video playback, and document composition functions, as well as video conferencing, and photo and/or video capturing functions.

In order to perform the video conferencing and photo and/or video capturing functions, a laptop computer may generally be equipped with a small-sized camera in a bezel surrounding a display.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

According to embodiments of the disclosure, an electronic device may include a lens assembly including a first lens, a second lens, a third lens, and a fourth lens disposed along an optical axis direction from an object side toward an image side, and an image sensor disposed to receive light focused or guided by the lens assembly. The first lens may have a positive refractive power. The second lens may have a negative refractive power, and the third lens may have a positive refractive power. At least one of an object-side surface or an image-side surface of the second lens (L2) may have an inflection point.

In an embodiment, the electronic device may satisfy the following [Formula 1] and [Formula 2].

$$[\text{Formula 1}]$$

$$0.03 \leq \frac{\text{OAL}}{\text{HFoV}} \leq 0.045$$

$$[\text{Formula 2}]$$

$$80 \leq \text{FoV} \leq 110$$

Herein, 'OAL' is a distance from an object-side surface of the first lens to an image plane, HFoV is a half field of view of an optical system including the lens assembly, and FoV is a field of view of the optical system including the lens assembly.

According to embodiments of the disclosure, an electronic device may include a display, a bezel structure surrounding at least a portion of the display, and a camera module disposed in the bezel structure. The camera module may include a lens assembly including a first lens, a second lens, a third lens, and a fourth lens disposed along an optical axis direction from an object side toward an image side, and an image sensor disposed to receive light focused or guided by the lens assembly. The first lens (L1) may have a positive refractive power. The second lens (L2) may have a negative refractive power, and the third lens (L3) may have a positive refractive power. At least one of an object-side surface or an image-side surface of the second lens (L2) may have an inflection point. The image-side surface of the second lens may have an inflective shape in which a chief portion adjacent to an optical axis is concave, and a marginal portion is convex.

In an embodiment, the electronic device may satisfy the following [Formula 1] and [Formula 2].

[Formula 1]

$$0.03 \leq \frac{\text{OAL}}{\text{HFoV}} \leq 0.045$$

[Formula 2]

$$80 \leq \text{FoV} \leq 110$$

Herein, 'OAL' is a distance from an object-side surface of the first lens to an image plane, HFoV is a half field of view of an optical system including the lens assembly, and FoV is a field of view of the optical system including the lens assembly.

[Brief Description of Drawings]

The above or other aspects, configurations, and/or advantages of an embodiment of the disclosure may be more apparent from the following detailed description with reference to the accompanying drawings.

FIG. 1A is a configuration diagram illustrating a lens assembly according to an embodiment of the disclosure.
FIG. 1B is an enlarged view illustrating a second lens portion of FIG. 1A.
FIG. 2 is a graph illustrating spherical aberration of the lens assembly according to the embodiment of FIG. 1A.
FIG. 3 is a graph illustrating astigmatism of the lens assembly according to the embodiment of FIG. 1A.
FIG. 4 is a graph illustrating distortion of the lens assembly according to the embodiment of FIG. 1A.
FIG. 5 is a configuration diagram illustrating a lens assembly according to an embodiment of the disclosure.
FIG. 6 is a graph illustrating spherical aberration of the lens assembly according to the embodiment of FIG. 5.
FIG. 7 is a graph illustrating astigmatism of the lens assembly according to the embodiment of FIG. 5.
FIG. 8 is a graph illustrating distortion of the lens assembly according to the embodiment of FIG. 5.
FIG. 9 is a configuration diagram illustrating a lens assembly according to an embodiment of the disclosure.
FIG. 10 is a graph illustrating spherical aberration of the lens assembly according to the embodiment of FIG. 9.
FIG. 11 is a graph illustrating astigmatism of the lens assembly according to the embodiment of FIG. 9.
FIG. 12 is a graph illustrating distortion of the lens assembly according to the embodiment of FIG. 9.
FIG. 13 is a configuration diagram illustrating a lens assembly according to an embodiment of the disclosure.
FIG. 14 is a graph illustrating spherical aberration of the lens assembly according to the embodiment of FIG. 13.
FIG. 15 is a graph illustrating astigmatism of the lens assembly according to the embodiment of FIG. 13.
FIG. 16 is a graph illustrating distortion of the lens assembly according to the embodiment of FIG. 13.
FIG. 17 is a block diagram illustrating a lens assembly according to an embodiment of the disclosure.
FIG. 18 is a graph illustrating spherical aberration of the lens assembly according to the embodiment of FIG. 17.
FIG. 19 is a graph illustrating astigmatism of the lens assembly according to the embodiment of FIG. 17.
FIG. 20 is a graph illustrating distortion of the lens assembly according to the embodiment of FIG. 17.
FIG. 21 is a block diagram of an electronic device in a network environment according to various embodiments.
FIG. 22 is a block diagram illustrating a camera module according to various embodiments.

Throughout the accompanying drawings, similar reference numerals may be assigned to similar components, configurations, and/or structures.

[Mode for Carrying out the Invention]

A camera may be mounted in a bezel surrounding a display in a laptop computer. Since the area of the bezel is narrow, the camera mounted therein may be required to have a very compact size. Further, the camera may be required to sufficiently secure a back focal length (BFL) to provide a space for arranging essential components therein, such as a filter or an image sensor included inside the camera. When a camera for a laptop computer is designed considering a narrow installation space for the camera and an essentially required BFL, the camera may be formed to have a field of view of approximately 85 to 88 degrees or less.

However, along with the recent increase in video conferencing, there is a demand for developing laptop computers that provide a user environment with a field of view of approximately 90 degrees or more.

Various embodiments of the disclosure may provide a camera module compactly configured to be disposed in an electronic device (e.g., a laptop computer) having a narrow component arrangement space, while having a field of view of approximately 90 degrees or more and optimal optical performance, and an electronic device including the same.

The technical objects to be achieved by the disclosure are not limited to those mentioned above, and other technical objects not mentioned will be clearly understood by those skilled in the art.

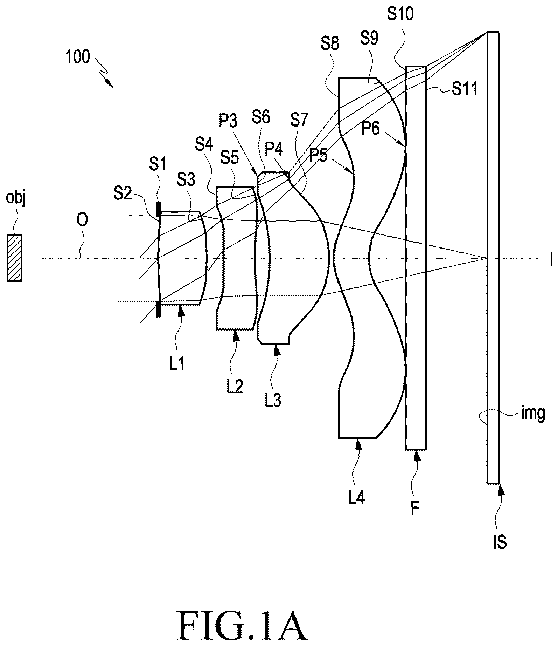

Various implementation example(s) of a lens assembly and components included therein will be described below with reference to FIGS. 1A to 20.

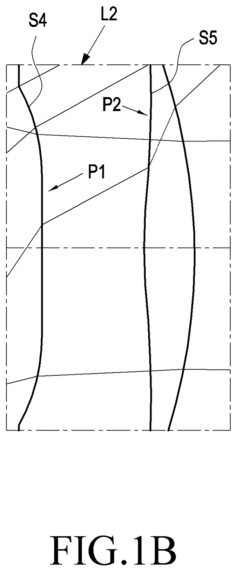

FIG. 1A is a configuration diagram illustrating a lens assembly 100 according to one of various embodiments of the disclosure. FIG. 1B is an enlarged view illustrating a second lens portion of FIG. 1A.

Referring to FIG. 1A, the lens assembly 100 according to one of various embodiments of the disclosure may include a plurality of lenses (e.g., L1, L2, L3, and L4) and an image sensor IS. The lens assembly 100 may form an optical system capable of covering a field of view exceeding approximately 80 degrees, and depending on an embodiment, covering a field of view of up to approximately 110 degrees as well as 100 degrees by including the plurality of lenses (e.g., L1, L2, L3, and L4) and the image sensor IS.

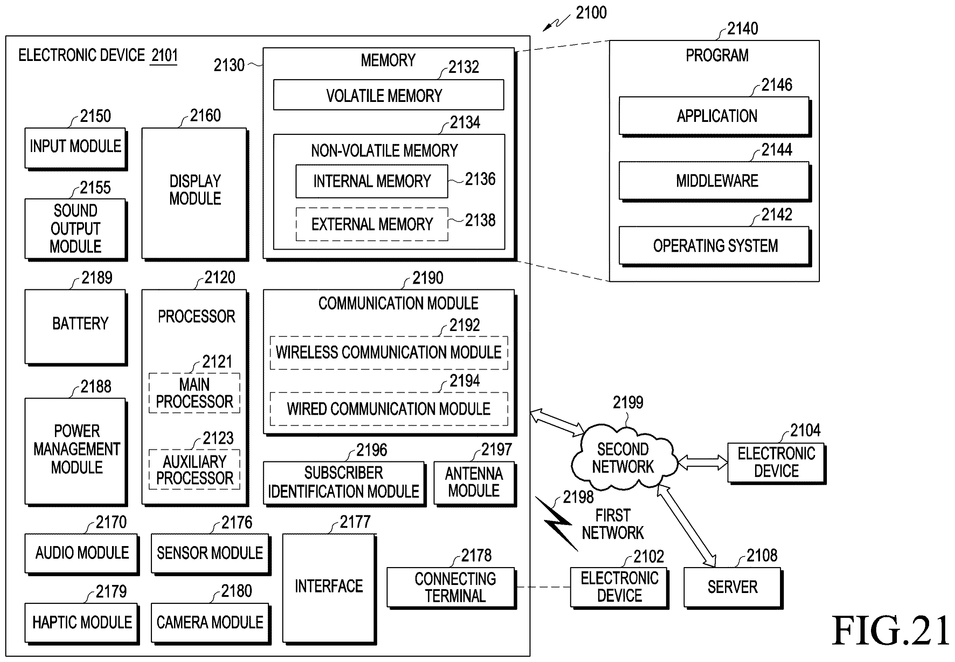

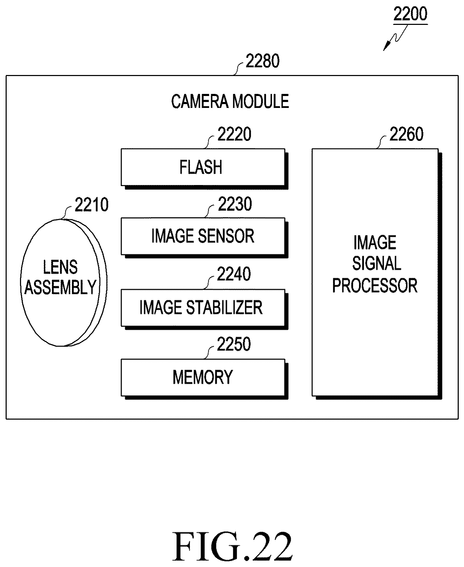

According to various embodiments, the image sensor IS may be mounted in an electronic device. The electronic device (e.g., a laptop computer) may include a display, a bezel structure surrounding at least a portion of the display, and a camera module (e.g., a camera module 2180 of FIG. 21 and a camera module 2280 of FIG. 22) disposed in the bezel structure. The lens assembly 100 including the plurality of lenses (e.g., L1, L2, L3, and L4) may be mounted in an optical device and/or the electronic device, with the image sensor IS installed therein. For example, in describing various embodiments of the disclosure, an example in which the image sensor IS is provided in the lens assembly 100 will be described. However, the image sensor IS may be mounted and used in the optical device and/or the electronic device, in which the lens assembly 100 is mounted.

According to various embodiments, the image sensor IS, which is a sensor mounted on a circuit board (not shown) and disposed in alignment with an optical axis O-I, may respond to light. The image sensor IS may include, for example, a sensor such as a complementary metal-oxide semiconductor (CMOS) or a charge coupled device (CCD). The image sensor IS is not limited thereto and may include, for example, various elements that convert an image of an object into an electrical image signal. The image sensor IS may obtain an image of an object obj by detecting brightness information, contrast ratio information, color information, and so on from light passing through the plurality of lenses (e.g., L1, L2, L3, and L4).

According to various embodiments, the plurality of lenses (e.g., L1, L2, L3, and L4) included in the lens assembly 100 may include a plastic lens. Additionally, the image sensor IS may have an image height of approximately 1.19mm. For reference, for in a thin image sensor formed in a substantially rectangular (e.g., square) shape with the optical axis O-I as a normal line, the image height may refer to half of the diagonal length of the image sensor. According to an embodiment, the image sensor IS may be an image sensor having a size of 1/7" (approximately 0.14 inches).

According to various embodiments, the lens assembly 100 may have the optical axis O-I from an object (or external object) side O toward an image side I. In describing the configuration of each lens below, for example, the object side may represent a direction in which the object obj is located, and the image side may represent a direction in which an image plane img with an image formed thereon is located. In addition, a "surface facing the object side" of a lens may refer to, for example, a surface in the direction in which the object obj is located with respect to the optical axis O-I, which means a left surface (or front surface) of the lens in the drawings. A "surface facing the image side" may refer to a surface in the direction in which the image plane img is located with respect to the optical axis O-I, indicating a right surface (or rear surface) of the lens in the drawings. Herein, the image plane img may be, for example, a portion where an imaging device or the image sensor IS is disposed and an image is formed.

Facing the object side O along the optical axis O-I based on at least one of the plurality of lenses included in the lens assembly 100 may be defined as 'facing a first direction (or forward),' and facing the image side I along the optical axis O-I may be defined as 'facing a second direction (or backward).' According to various embodiments, when a lens (e.g., a first lens L1) includes a surface facing the object side O, it may be said that the surface facing the object side O faces the first direction. When a lens (e.g., the first lens L1) includes a surface facing the image side I, it may be said that the surface facing the image side I faces the second direction.

Referring to FIG. 1A, the lens assembly 100 according to various embodiments may include, for example, a first lens L1, a second lens L2, a third lens L3, and a fourth lens L4 as a plurality of lenses (e.g., L1, L2, L3, and L4) sequentially arranged in a direction of the optical axis O-I (e.g., a direction from the object side O toward the image side I). The plurality of lenses (e.g., L1, L2, L3, and L4) may be disposed in alignment with the image sensor IS along the optical axis. When it is said that 'the plurality of lenses (e.g., L1, L2, L3, and L4) are aligned with the image sensor IS along the optical axis,' this may mean that chief portions of the plurality of lenses (e.g., L1, L2, L3, and L4) and a chief portion of the image sensor IS are aligned to be located on the optical axis.

In describing the plurality of lenses (e.g., L1, L2, L3, and L4) according to various embodiments, a portion closer to the optical axis O-I in each lens may be referred to hereinafter as a 'chief portion', and a portion farther from the optical axis O-I (or near an edge of the lens) may be referred to hereinafter as a 'marginal portion.' The chief portion may be, for example, a portion of the first lens L1 that intersects the optical axis O-I. The marginal portion may be, for example, a portion of the first lens L1 spaced apart from the optical axis by a predetermined distance. The marginal portion may include, for example, an end portion of the lens farthest from the optical axis O-I.

According to various embodiments, to configure an optical device, the first lens L1 included in the lens assembly 100 may have a positive refractive power, and the second lens L2 may have a negative refractive power. The third lens L3 may have a positive refractive power. For the fourth lens L4, either a positive refractive power or a negative refractive power may be selected. For example, the first lens L1, the second lens L2, the third lens L3, and the fourth lens L4 may sequentially have 'positive, negative, positive, and positive' refractive powers or 'positive, negative, positive, and negative' refractive powers. In the above embodiments, when light parallel to the optical axis O-I is incident on a lens having a positive refractive power, the light passing through the lens may be converged. For example, a lens having a positive refractive power may be a lens based on the principle of a convex lens. On the contrary, when parallel light is incident on a lens having a negative refractive power, the light passing through the lens may be diverged. For example, a lens having a negative refractive power may be a lens based on the principle of a concave lens.

According to various embodiments, the first lens L1 and the second lens L2 may be configured as small-aperture lenses having a relatively smaller effective diameter compared to other lenses (the third lens L3 and the fourth lens L4) in the lens assembly with four lenses. An 'effective diameter' may refer to the distance between one end and the other end of a boundary where light is received by a lens in a direction perpendicular to the optical axis O-I. Since lenses should be installed in a limited space within an electronic device, the overall length of the optical system may be reduced by implementing the first lens L1 and the second lens L2 as small-aperture lenses, with the first lens L1 as a lens having a positive refractive power and the second lens L2 as a lens having a negative refractive power.

According to various embodiments, surfaces S2, S3, S4, and S5 of the first lens L1 and the second lens L2 may be formed as aspheric surfaces. Spherical aberration that may occur in the first lens L1 and the second lens L2 may be reduced and/or prevented by implementing the surfaces S2, S3, S4, and S5 as aspheric surfaces. Further, surfaces S6, S7, S8, and S9 of the third lens L3 and the fourth lens L4 may also be formed as aspheric surfaces.

According to various embodiments, the radii of curvature, thicknesses, overall length (OAL), and focal lengths of the lenses in the disclosure may all be in mm, unless otherwise specified. Further, the thickness of a lens, the gap between lenses, and an OAL (or total track length (TTL)) may be distances measured along the optical axis of the lenses. In describing a lens shape, a surface having a convex shape means that an optical-axis portion of the surface is convex, unless otherwise specified, such as having an inflection point. A surface having a concave shape means that an optical-axis portion of the surface is concave, unless otherwise specified, such as having an inflection point. For example, even if one surface (an optical-axis portion of the surface) of a lens is described as convex, an edge portion (a portion spaced from the optical-axis portion of the surface by a specific distance) may be concave. Similarly, even if one surface (an optical-axis portion of the surface) of a lens is described as concave, an edge portion (a portion spaced from the optical-axis portion of the surface by a specific distance) may be convex.

In the following description and claims, an inflection point may refer to a point where the radius of curvature changes in a part that does not intersect the optical axis. The inflection point may be located at a point where one surface of a lens changes from convex to concave or vice versa. According to the disclosure, at least one of the object-side surface S4 or the image-side surface S5 of the second lens L2 may include an inflection point. According to an embodiment, the image-side surface S5 of the second lens L2 may have an inflective shape in which a chief portion adjacent to the optical axis is concave and a marginal portion is convex. Further, according to an embodiment, the object-side surface S4 of the second lens L2 may also have an inflective shape in which a chief portion adjacent to the optical axis is concave and a marginal portion is convex. Referring to FIGS. 1A and 1B, the second lens L2 may have an inflective shape on both the object-side surface S4 and the image-side surface S5, and include a first inflection point P1 on the object-side surface S4 and a second inflection point P2 on the image-side surface S5.

In the first lens L1, the surface S2 facing the object side O may be convex toward the object side O, and the surface S3 facing the image side I may be convex or concave toward the image side I. When the field of view of the optical system is less than 90 degrees, the entire focal length is longer than when the field of view is equal to or greater than 90 degrees, which may increase the OAL of the lens assembly. Therefore, when the field of view of the optical system is less than 90 degrees, the OAL of the lens assembly may be reduced by applying a meniscus lens in which the surface S2 facing the object side O is convex toward the object side O, and the surface S3 facing the image side I is concave toward the image side I as the first lens L1. When the field of view of the optical system is equal to or greater than 90 degrees, it may be advantageous to apply a biconvex lens in which the surface S2 facing the object side O is convex toward the object side O, and the surface S3 facing the image side I is convex toward the image side I as the first lens L1, as illustrated in FIG. 1A.

The lens assembly 100 may include at least one aperture stop S1. Depending on the position of the aperture stop, the amount of light reaching the image plane img of the image sensor IS may be adjusted. According to an embodiment, the aperture stop may be disposed at a position adjacent to the object-side surface S2 in front of the first lens L1. Further, according to an embodiment, the aperture stop may be disposed at a position adjacent to the image-side surface S3 behind the first lens L1. In FIG. 1A, the aperture stop is disposed at a position adjacent to the object-side surface S2 in front of the first lens L1, which may minimize the outer diameter of the lens and thus minimizing the entrance pupil diameter of the lens assembly.

In the second lens L2, the surface S4 facing the object side O may be convex or concave toward the object side O, and the surface S5 facing the image side I may be concave toward the image side I. When the field of view of the optical system is less than 90 degrees, a biconcave shape advantageous in terms of reducing the OAL of the lens assembly and/or securing optical performance, for example, a shape in which the surface S4 facing the object side O is concave toward the object side O and the surface S5 facing the image side I is concave toward the image side I may be applied. Since the chief portion of the second lens L2 has a concave shape, spherical aberration may be easily controlled. When the field of view of the optical system is equal to or greater than 90 degrees, a meniscus shape may be applied in which the surface S4 facing the object side O is convex toward the object side O and the surface S5 facing the image side I is concave toward the image side I, thereby effectively controlling astigmatism occurring at the marginal portion due to the resulting shortened focal length. Referring to FIGS. 1A and 1B, since both the surface S4 facing the object side O and the surface S5 facing the image side I of the second lens L2 have an inflective shape as described above, the two surfaces may have a convex form toward the image side at their marginal portions, thereby preventing the angle of incidence of marginal rays entering the image sensor IS from increasing.

The third lens L3 may have a meniscus shape in which both the object-side surface S6 and the image-side surface S7 are convex toward the image side. According to an embodiment, when the image-side surface S5 of the second lens L2 is concave toward the image side, the object-side surface S6 of the third lens L3 is formed concave toward the object side. Thus, the second lens L2 and the third lens L3 may have a symmetrical shape with respect to an imaginary line perpendicular to the optical axis between the second lens L2 and the third lens L3. This may facilitate spherical aberration control. Further, since the third lens L3 has a meniscus shape, it is advantageous for controlling astigmatism of the marginal portion. According to an embodiment, both the object-side surface S6 and the image-side surface S7 of the third lens L3 may also have an inflective shape. For example, a third inflection point P3 may be formed on the object-side surface S6 and a fourth inflection point P4 may be formed on the image-side surface S7 in the third lens L3. As the third lens L3 has a meniscus shape and/or includes inflection points, spherical aberration at the chief portion of the lens and astigmatism at the marginal portion of the lens may be effectively controlled.

The fourth lens L4 may have a meniscus shape in which both the object-side surface S8 and the image-side surface S9 are convex toward the object side. As the fourth lens L4 has a meniscus shape convex toward the object side at its chief portion, the size of the electronic device may be miniaturized, and for example, even with a field of view exceeding 100 degrees, it is advantageous for securing an entire focal length (EFL) and a back focal length (BFL). According to an embodiment, both the object-side surface S8 and the image-side surface S9 of the fourth lens L4 may have an inflective shape. For example, a fifth inflection point P5 may be formed on the object-side surface S8 and a sixth inflection point P6 may be formed on the image-side surface S9 in the fourth lens L4. As the fourth lens L4 has a meniscus shape and/or includes inflection points, aberration in a marginal area of the image sensor may be easily corrected. According to an embodiment, each of the object-side surface S8 and the image-side surface S9 of the fourth lens L4 may have an inflective shape in which the radii of curvature of the chief portion adjacent to the optical axis and the marginal portion have opposite signs. This may be advantageous for controlling astigmatism of the marginal portion and securing the marginal light intensity of light entering the image sensor.

According to various embodiments, the first lens L1 and the second lens L2 may configured as lenses with small effective diameters to reduce the size of the optical device, while the third lens L3 and the fourth lens L4 may be configured as lenses with relatively large effective diameters. According to an embodiment, the fourth lens L4 may have the largest effective diameter in the lens assembly 100. Aberration may be effectively corrected by sequentially disposing the first lens L1, the second lens L2, the third lens L3, and the fourth lens L4 such that they have progressively larger effective diameters toward the image sensor IS.

According to various embodiments, the lens assembly 100 may be implemented with lenses, each made of synthetic resin (e.g., plastic) having a specific refractive index. The plurality of lenses made of synthetic resin may allow for a high degree of design freedom in terms of size and shape. For example, regarding the refractive index at a specific wavelength of visible light (e.g., 587.6000nm, d-line), the first lens L1 may be made of a synthetic resin lens with a refractive index of 1.55 or less, the second lens L2 with a refractive index of 1.66 or more, the third lens L3 with a refractive index of 1.55 or less, and the fourth lens L4 with a refractive index of 1.55 or less. This refractive index design may enable the miniaturization of the lens assembly and/or the electronic device including the same. According to an embodiment, a lens formed of synthetic resin (e.g., plastic) may tend to have an Abbe number which increases or decreases as the refractive index decreases or increases.

According to various embodiments, as the gap between adjacent lenses decreases in the plurality of lenses (e.g., L1, L2, L3, and L4) forming the lens assembly 100, the OAL of the lens assembly 100 may become shorter. For example, when an electronic device including the lens assembly 100 according to various embodiments of the disclosure is to be made small, it is advantageous to keep the OAL of the lens assembly 100 as short as possible. However, there may be physical limits to shortening the OAL of the lens assembly 100 while securing an appropriate telephoto ratio. According to various embodiments of the disclosure, the gap between the plurality of lenses (e.g., L1, L2, L3, and L4) may be designed in various ways according to required optical characteristics (e.g., aberration, wide-angle, and/or brightness characteristics) for the lens assembly 100.

The lens assembly 100 may further include a filter F disposed between the fourth lens L4 and the image sensor IS. The filter F may include an object-side surface S10 and an image-side surface S11 and block light, such as infrared rays, detected by a film or the image sensor of the optical device. The filter F may include, for example, at least one of a low pass filter or a cover glass. When the filter F is installed, the colors of images detected and captured through the image sensor IS may closely resemble colors perceived by a human eye. Further, the filter F may be configured to transmit visible light while emitting infrared light to the outside, thereby preventing infrared light from reaching the image plane img of the image sensor.

The lens assembly 100 as described above may be disposed in a narrow area and have a wide field of view range by satisfying the following [Formula 1] and [Formula 2].

[Formula 1]

$$0.03 \leq \frac{OAL}{HFoV} \leq 0.045$$

[Formula 2]

$$80 \leq FoV \leq 110$$

Herein, 'OAL' may represent the distance from the object-side surface S2 of the first lens L1 to the image plane img, HFoV may represent a half field of view of the optical system including the lens assembly, and FoV may represent the field of view of the optical system including the lens assembly. [Formula 1] represents the ratio of the OAL to the half field of view of the optical system including the lens assembly. When the lens assembly and/or the electronic device exceeds the upper limit of [Formula 1], the OAL is too large relative to the field of view, which may make miniaturization difficult. On the contrary, when it falls below the lower limit, the OAL becomes too small to accommodate four lenses, making it difficult to secure sufficient optical performance. [Formula 2] limits the field of view of the optical system including the lens assembly. When the lens assembly and/or the electronic device exceeds the upper limit of [Formula 2], it may be advantageous for miniaturization due to a short focal length but make it difficult to secure a BFL required for disposing components like a filter or an image sensor. On the contrary, when it falls below the lower limit, the focal length and hence the OAL increase, which may be disadvantageous for miniaturization.

Further, the lens assembly 100 may satisfy the following [Formula 3].

[Formula 3]

$$32 \leq Vd_1 - Vd_2 \leq 39$$

Herein, Vd1 may represent the Abbe number of the first lens L1, and Vd2 may represent the Abbe number of the second lens L2. [Formula 3] relates to the difference between the Abbe numbers of the first lens L1 and the second lens L2. When the lens assembly and/or the electronic device exceeds the upper limit of [Formula 3], it may be difficult to apply synthetic resin (e.g., a plastic lens), and when it falls below the lower limit, chromatic aberration correction may be difficult.

Further, the lens assembly may satisfy the following [Formula 4].

[Formula 4]

$$1.5 \leq nd_3 \leq 1.65$$

Herein, 'nd3' may represent the d-line (e.g., 587.6000 nm) refractive index of the third lens L3. The refractive index of the second lens L2 may be set to 1.66 or more, and [Formula 4] may be for determining the refractive index of the third lens L3 relative to that of the second lens L2. When the lens assembly and/or the electronic device exceeds the upper limit in [Formula 4], chromatic aberration control may be difficult due to a small refractive index difference between the second lens L2 and the third lens L3, and when it falls below the lower limit in [Formula 4], the refractive index of L3 becomes excessively small, which may make aberration control difficult.

Further, the lens assembly may satisfy the following [Formula 5].

[Formula 5]

$$0.6 \leq \frac{f3}{f1} \leq 4.5$$

Herein, 'f1' may be the focal length of the first lens L1, and 'f3' may be the focal length of the third lens L3. When the lens assembly and/or the electronic device exceeds the upper limit of [Formula 5], the focal length of the third lens L3 becomes excessively long relative to that of the first lens L1, which may reduce the relative refractive power of the third lens L3. Therefore, the miniaturization of the electronic device may be difficult. When the lens assembly and/or the electronic device falls below the lower limit of [Formula 5], the relative refractive power of L3 becomes strong, which may be advantageous for the miniaturization of the electronic device but increase the sensitivity of the optical system.

Further, the lens assembly may satisfy the following [Formula 6].

[Formula 6]

$$1.3 \leq \frac{OAL}{IH} \leq 1.6$$

Herein, 'OAL' may be the distance from the object-side surface S2 of the first lens L1 to the image plane img, and 'IH' may be the maximum height of the image plane img. When the lens assembly and/or the electronic device exceeds the upper limit of [Formula 6], the OAL of the lens assembly increases relative to the image height of the image sensor IS, which may make the miniaturization of the lens assembly difficult, and when the lens assembly and/or the electronic device falls below the lower limit, a space required for including four lenses and/or the distances between the lens and the sensor decrease, resulting in insufficient assembly spaces for the image sensor IS and the filter F and an insufficient focus adjustment margin due to lens-specific focus errors. Therefore, multiple focusing failures may occur during manufacturing.

[Table 1] below may list various optical data for the four lenses (e.g., L1, L2, L3, and L4) and/or the filter F included in the lens assembly 100. 'obj' may represent an object, and 'img' may represent the image plane of the image sensor IS. 'S2 to S11' may represent the surfaces of the related plurality of lenses (e.g., L1, L2, L3, and L4) and/or the filter F. 'S1' may represent the aperture stop sto. y radius may represent the radius of curvature of a lens, Thickness may represent a lens thickness or air gap, Nd may represent the refractive index of a medium (e.g., the lens), and Vd may represent the Abbe number of the lens. When the lens assembly 100 has an F-number Fno of approximately 2.27, a field of view ANG of approximately 95.92 degrees, a focal length of approximately 1.05mm, and an image height (ImgH) of 1.19 for the image sensor IS, the lens assembly 100 may satisfy the above-described Formulas (and/or at least one of the above-described Formulas) while having the optical data listed in [Table 1] below.

[Table 1]

| Lens surface | Lens surface type | Radius of curvature (y radius) | Thickness | Refractive index (Nd) | Abbe number (Vd) |
|---|---|---|---|---|---|
| obj | Sphere | infinity | 500 | | |
| S1(sto) | Sphere | infinity | -0.014 | | |
| S2 | Odd Polynomial | 1.466 | 0.257 | 1.544008 | 55.91 |
| S3 | Odd Polynomial | -1.776 | 0.078 | | |
| S4 | Odd Polynomial | 3.608 | 0.160 | 1.670733 | 19.2299 |
| S5 | Odd Polynomial | 1.351 | 0.080 | | |
| S6 | Odd Polynomial | -0.756 | 0.305 | 1.544008 | 55.91 |
| S7 | Odd Polynomial | -0.507 | 0.020 | | |
| S8 | Odd Polynomial | 0.339 | 0.180 | 1.544008 | 55.91 |
| S9 | Odd Polynomial | 0.290 | 0.190 | | |
| S10 | Sphere | infinity | 0.110 | 1.516798 | 64.1983 |
| S11 | Sphere | infinity | 0.227 | | |
| img | Sphere | infinity | 0.000 | | |

The refractive index data in [Table 1] may, for example, represent refractive indexes at a wavelength of 587.6000nm. [Table 2] and [Table 3] below list the aspheric coefficients of the four lenses (e.g., L1, L2, L3, and L4) included in the lens assembly 100. The aspheric coefficients may be calculated by the following [Formula 7].

[Formula 7]

$$x = \frac{(y^2/R)}{1+\sqrt{1-(1+K)(\frac{y}{R})^2}} + \sum_i A_i y^i$$

Herein, 'x' may represent the distance (sag) from a vertex of a lens in the direction of the optical axis O-I, 'R' may represent the radius of curvature at the vertex of the lens, 'y' may represent the distance in a direction perpendicular to the optical axis, 'K' may represent the Conic constant, and 'A$_i$' may represent an aspheric coefficient.

[Table 2]

| Lens surface | S2 | S3 | S4 | S5 |
|---|---|---|---|---|
| k | -2.40117E+00 | -1.97557E+00 | 5.47158E+01 | -9.27532E+01 |
| A$_4$ | -1.89661E+00 | -5.44020E+00 | -1.02434E+01 | 1.87425E+00 |
| A$_6$ | 7.88274E+01 | -3.83983E+01 | 2.0IS0E+02 | -1.15517E+02 |
| A$_8$ | -5.18898E+03 | 3.66377E+03 | -1.04100E+04 | 2.32273E+03 |
| A$_{10}$ | 1.79584E+05 | -1.25990E+05 | 3.59359E+05 | -3.31640E+04 |
| A$_{12}$ | -3.63387E+06 | 2.36630E+06 | -7.76735E+06 | 3.54161E+05 |
| A$_{14}$ | 3.91789E+07 | -2.48313E+07 | 1.05081E+08 | -2.77294E+06 |
| A$_{16}$ | -1.73780E+08 | 1.33403E+08 | -8.61356E+08 | 1.45173E+06 |
| A$_{18}$ | 0.00000E+00 | -2.75321E+08 | 3.89145E+09 | -4.42173E+06 |
| A$_{20}$ | 0.00000E+00 | 0.00000E+00 | -7.38718E+09 | 5.85158E+06 |
| A$_{22}$ | 0.00000E+00 | 0.00000E+00 | 0.00000E+00 | 0.00000E+00 |
| A$_{24}$ | 0.00000E+00 | 0.00000E+00 | 0.00000E+00 | 0.00000E+00 |
| A$_{26}$ | 0.00000E+00 | 0.00000E+00 | 0.00000E+00 | 0.00000E+00 |
| A$_{28}$ | 0.00000E+00 | 0.00000E+00 | 0.00000E+00 | 0.00000E+00 |
| A$_{30}$ | 0.00000E+00 | 0.00000E+00 | 0.00000E+00 | 0.00000E+00 |

[Table 3]

| Lens surface | S6 | S7 | S8 | S9 |
|---|---|---|---|---|
| k | -9.80092E+00 | -2.54512E+00 | -3.03508E+00 | -1.98704E+00 |
| A$_4$ | 2.95358E+00 | -7.06476E+00 | -3.42956E+00 | -1.38189E+00 |
| A$_6$ | -3.67680E+01 | 1.28907E+02 | 5.57663E+01 | -3.28104E+01 |
| A$_8$ | -7.11050E+02 | -2.58740E+03 | -1.15358E+03 | 4.15177E+02 |
| A$_{10}$ | 2.53736E+04 | 4.68766E+04 | 1.3IS4E+04 | -2.76488E+03 |
| A$_{12}$ | -3.36222E+05 | -7.07370E+05 | -9.55908E+04 | 1.24387E+04 |
| A$_{14}$ | 2.48969E+06 | 7.86651E+06 | 4.78920E+05 | -4.01932E+04 |
| A$_{16}$ | -1.06060E+07 | -5.97263E+07 | -1.73807E+06 | 9.47707E+04 |
| A$_{18}$ | 2.40271E+07 | 2.96748E+08 | 4.65397E+06 | -1.62593E+05 |
| A$_{20}$ | -2.21992E+07 | -9.15814E+08 | -9.19796E+06 | 1.99725E+05 |

(continued)

| Lens surface | S6 | S7 | S8 | S9 |
|---|---|---|---|---|
| $A_{22}$ | 0.00000E+00 | 1.58572E+09 | 1.32269E+07 | -1.69995E+05 |
| $A_{24}$ | 0.00000E+00 | -1.17458E+09 | -1.34223E+07 | 9.41824E+04 |
| $A_{26}$ | 0.00000E+00 | 0.00000E+00 | 9.08668E+06 | -2.97045E+04 |
| $A_{28}$ | 0.00000E+00 | 0.00000E+00 | -3.67502E+06 | 3.46038E+03 |
| $A_{30}$ | 0.00000E+00 | 0.00000E+00 | 6.70494E+05 | 2.91518E+02 |

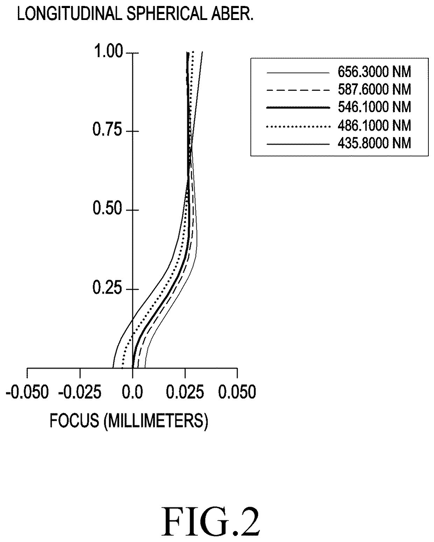

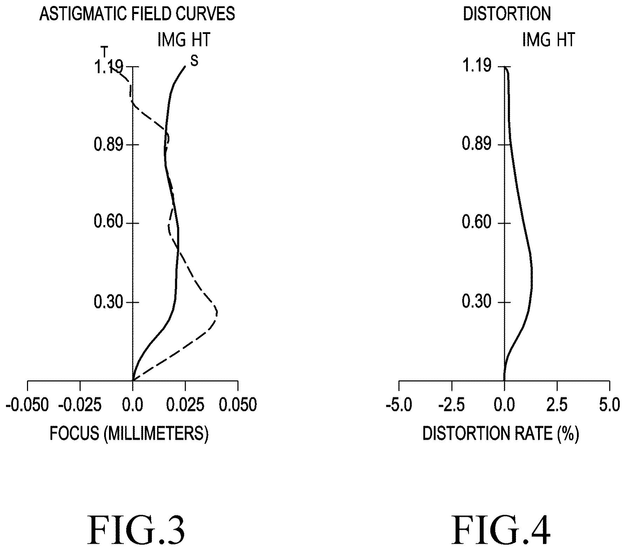

FIG. 2 is a graph illustrating spherical aberration of the lens assembly according to the embodiment of FIG. 1A. FIG. 3 is a graph illustrating astigmatism of the lens assembly according to the embodiment of FIG. 1A. FIG. 4 is a graph illustrating distortion of the lens assembly according to the embodiment of FIG. 1A. Referring to FIG. 2, spherical aberration may be a phenomenon in which light passing through different portions (e.g., the chief portion and the marginal portion) of a lens is focused at different positions.

In FIG. 2, the horizontal axis represents degrees of longitudinal spherical aberration, and the vertical axis represents normalized distances from the center of the optical axis. A change in longitudinal spherical aberration according to the wavelength of light may be illustrated.

The longitudinal spherical aberration of the lens assembly 100 may be represented for light having wavelengths of approximately 656.3000 nanometers (nm), approximately 587.6000nm, approximately 546.1000nm, approximately 486.1000nm, and approximately 435.8000nm, respectively. Referring to FIG. 2, it may be identified that the longitudinal spherical aberration of the lens assembly 100 according to various embodiments of the disclosure in the visible light band is limited to within approximately +0.025 to approximately -0.025, showing stable optical characteristics.

Referring to FIG. 3, astigmatism may refer to mismatch between the focal points of light passing in the vertical and horizontal directions, when the tangential plane (or meridional plane) and sagittal plane of a lens have different radii.

The astigmatism of the lens assembly 100 is a result obtained at a wavelength of approximately 587.6000nm. The dotted line may represent astigmatism T (e.g., tangential field curvature) in a tangential direction, and the solid line may represent astigmatism S (e.g., sagittal field curvature) in a sagittal direction. As noted from FIG. 3, the astigmatism of the lens assembly 100 according to various embodiments of the disclosure is generally limited to within +0.050 to -0.050, showing stable optical characteristics.

Referring to FIG. 4, distortion occurs because an optical magnification varies depending on the distance from the optical axis O-I. This may cause an image formed on an actual image plane (e.g., the image plane img in FIG. 1A) to appear larger or smaller than an image formed on a theoretical image plane.

In FIG. 4, the distortion of the lens assembly 100 is a result obtained at a wavelength of approximately 587.6000nm. An image captured using the lens assembly 100 may experience some distortion at a point away from the optical axis O-I. However, this distortion is within a range typically detectable in a camera module including lenses. According to an embodiment of the disclosure, the distortion rate of the lens assembly 100 is less than approximately 2.5%, which may provide good optical characteristics.

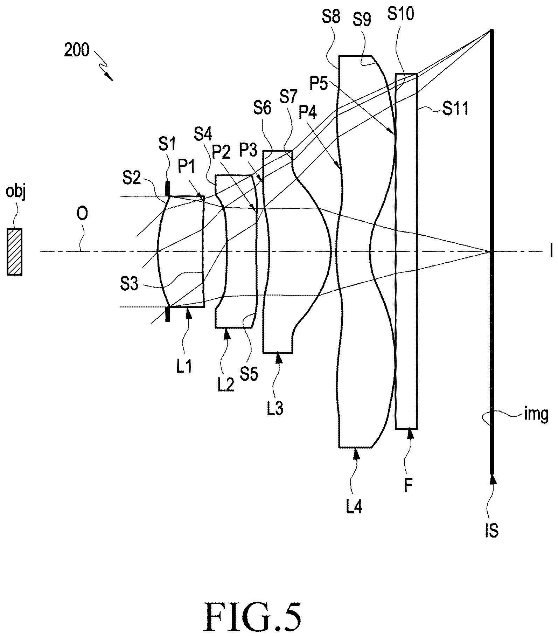

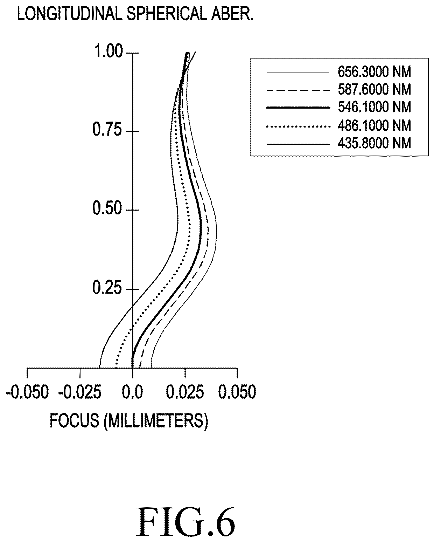

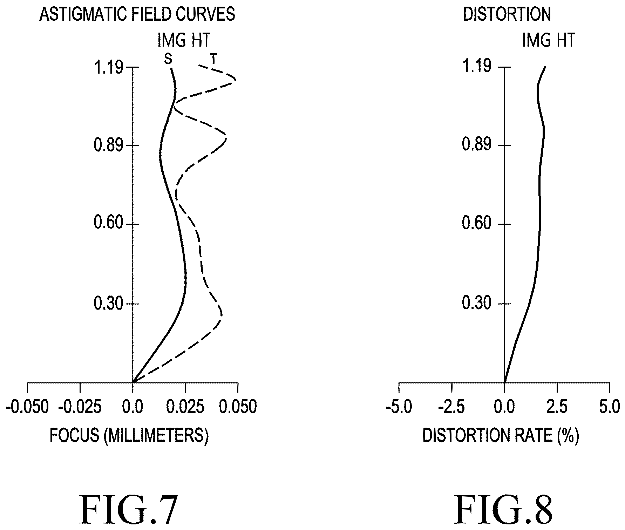

FIG. 5 is a configuration diagram illustrating a lens assembly according to an embodiment. FIG. 6 is a graph illustrating spherical aberration of the lens assembly according to the embodiment of FIG. 5. FIG. 7 is a graph illustrating astigmatism of the lens assembly according to the embodiment of FIG. 5. FIG. 8 is a graph illustrating distortion of the lens assembly according to the embodiment of FIG. 5.

The description of the lens assembly 100 according to the embodiments described before with reference to FIGS. 1A to 4 may be applied adaptively to lens assemblies 200, 300, 400, and 500 according to various other embodiments described below. Some of the lens assemblies 200, 300, 400, and 500 may have the same lens properties (e.g., field of view, focal length, autofocus, F-number (F-no), or optical zoom), or at least one lens assembly may have one or more lens properties different from those included in other lens assemblies. The lens assemblies 200, 300, 400, and 500 may include a flash, the image sensor IS, an image stabilizer, memory, or an image signal processor.

In describing various embodiments of the disclosure below, similar or no reference numerals may be assigned to components that may be easily understood from the foregoing embodiments. Further, detailed descriptions thereof may be omitted to the extent that they overlap with the foregoing descriptions.

Referring to FIGS. 5 to 8 together, the lens assembly 200 may include four lenses (e.g., L1, L2, L3, and L4), the filter F, and the image sensor IS.

Unlike the lens assembly 100 according to the embodiment of FIGS. 1A to 4, the image-side surface S3 of the first lens L1 is concave toward the image side, and the object-side surface S4 of the second lens L2 is concave toward the object side in the lens assembly 200 according to the embodiment of FIGS. 5 to 8, by way of example. Further, referring to FIG. 5, the lens assembly 200 may have a first inflection point P1 formed on the image-side surface S3 of the first lens L1, a second inflection point P2 formed on the image-side surface S5 of the second lens L2, a third inflection point P3 formed on the object-side surface S6 of the third lens L3, a fourth inflection point P4 formed on the object-side surface S8 of the fourth lens L4, and a fifth inflection point P5 formed on the image-side surface S9 of the fourth lens L4.

[Table 4] below may list various optical data for the four lenses (e.g., L1, L2, L3, and L4) and/or the filter F included in the lens assembly 200. 'obj' may represent an object, and 'img' may represent the image plane of the image sensor IS. 'S1' may represent the aperture stop sto, 'S2 to S11' may represent the surfaces of the related plurality of lenses (e.g., L1, L2, L3, and L4) and/or the filter F. y radius may represent the radius of curvature of a lens, Thickness may represent a lens thickness or air gap, Nd may represent the refractive index of a medium (e.g., the lens), and Vd may represent the Abbe number of the lens. When the lens assembly 200 has an F-number Fno of approximately 2.07, a field of view ANG of approximately 86.6 degrees, a focal length of approximately 1.22mm, and an ImgH of 1.19 for the image sensor IS, the lens assembly 200 may satisfy the above-described Formulas (and/or at least one of the above-described Formulas) while having the optical data listed in [Table 4] below.

[Table 4]

| Lens surface | Lens surface type | Radius of curvature (y radius) | Thickness | Refractive index (Nd) | Abbe number (Vd) |
|---|---|---|---|---|---|
| obj | Sphere | infinity | 500 | | |
| S1(sto) | Sphere | infinity | -0.067 | | |
| S2 | Odd Polynomial | 0.662 | 0.239 | 1.544008 | 55.91 |
| S3 | Odd Polynomial | 1.900 | 0.125 | | |
| S4 | Odd Polynomial | -17.202 | 0.160 | 1.670733 | 19.2299 |
| S5 | Odd Polynomial | 6.875 | 0.071 | | |
| S6 | Odd Polynomial | -0.878 | 0.330 | 1.544008 | 55.91 |
| S7 | Odd Polynomial | -0.431 | 0.020 | | |
| S8 | Odd Polynomial | 0.434 | 0.180 | 1.544008 | 55.91 |
| S9 | Odd Polynomial | 0.271 | 0.144 | | |
| S10 | Sphere | infinity | 0.110 | 1.516798 | 64.1983 |
| S11 | Sphere | infinity | 0.400 | | |
| img | Sphere | infinity | 0.000 | | |

The refractive index data in [Table 4] may represent refractive indexes, for example, at a wavelength of 587.6000nm. [Table 5] and [Table 6] below may list the aspheric coefficients of the four lenses (e.g., L1, L2, L3, and L4) included in the lens assembly.

[Table 5]

| Lens surface | S2 | S3 | S4 | S5 |
|---|---|---|---|---|
| k | 1.96662E+00 | -1.78455E+01 | 9.14117E+01 | -9.90000E+01 |
| $A_4$ | -8.65479E-01 | -3.73247E-01 | -3.58832E+00 | 1.45606E+00 |
| $A_6$ | -9.38194E+00 | -2.91677E+01 | 2.77314E+01 | -7.58804E+01 |
| $A_8$ | 4.11439E+02 | 8.77697E+02 | -2.8F8E+03 | 1.14420E+03 |
| $A_{10}$ | -1.34512E+04 | -2.51498E+04 | 9.46706E+04 | -8.89060E+03 |
| $A_{12}$ | 1.94634E+05 | 3.75319E+05 | -1.97689E+06 | 1.98549E+04 |
| $A_{14}$ | -1.39131E+06 | -2.97083E+06 | 2.38950E+07 | 1.61349E+05 |
| $A_{16}$ | 3.76380E+06 | 9.57172E+06 | -1.56526E+08 | -1.20575E+05 |
| $A_{18}$ | 0.00000E+00 | 0.00000E+00 | 4.35246E+08 | 2.53248E+05 |
| $A_{20}$ | 0.00000E+00 | 0.00000E+00 | 0.00000E+00 | 0.00000E+00 |
| $A_{22}$ | 0.00000E+00 | 0.00000E+00 | 0.00000E+00 | 0.00000E+00 |

(continued)

| Lens surface | S2 | S3 | S4 | S5 |
|---|---|---|---|---|
| $A_{24}$ | 0.00000E+00 | 0.00000E+00 | 0.00000E+00 | 0.00000E+00 |
| $A_{26}$ | 0.00000E+00 | 0.00000E+00 | 0.00000E+00 | 0.00000E+00 |
| $A_{28}$ | 0.00000E+00 | 0.00000E+00 | 0.00000E+00 | 0.00000E+00 |
| $A_{30}$ | 0.00000E+00 | 0.00000E+00 | 0.00000E+00 | 0.00000E+00 |

Table 6]

| Lens surface | S6 | S7 | S8 | S9 |
|---|---|---|---|---|
| k | -1.42440E+01 | -2.89288E+00 | -1.31906E+01 | -3.31672E+00 |
| $A_4$ | 1.94837E+00 | -1.14095E+01 | -2.05511E+00 | -4.79060E+00 |
| $A_6$ | -1.59420E+01 | 3.35412E+02 | -2.64699E+01 | 3.70306E+01 |
| $A_8$ | -1.04254E+03 | -7.84063E+03 | 5.37910E+02 | -2.46401E+02 |
| $A_{10}$ | 3.29389E+04 | 1.26799E+05 | -5.41390E+03 | 1.IS39E+03 |
| $A_{12}$ | -4.05883E+05 | -1.40680E+06 | 3.74637E+04 | -5.26859E+03 |
| $A_{14}$ | 2.68766E+06 | 1.07281E+07 | -1.84548E+05 | 1.58497E+04 |
| $A_{16}$ | -1.01321E+07 | -5.58517E+07 | 6.52269E+05 | -3.55581E+04 |
| $A_{18}$ | 2.05172E+07 | 1.96536E+08 | -1.66367E+06 | 5.94480E+04 |
| $A_{20}$ | -1.73381E+07 | -4.57745E+08 | 3.06418E+06 | -7.37769E+04 |
| $A_{22}$ | 0.00000E+00 | 6.73536E+08 | -4.03803E+06 | 6.72395E+04 |
| $A_{24}$ | 0.00000E+00 | -5.64726E+08 | 3.71437E+06 | -4.39384E+04 |
| $A_{26}$ | 0.00000E+00 | 2.04536E+08 | -2.26593E+06 | 1.95864E+04 |
| $A_{28}$ | 0.00000E+00 | 0.00000E+00 | 8.24007E+05 | -5.35446E+03 |
| $A_{30}$ | 0.00000E+00 | 0.00000E+00 | -1.35219E+05 | 6.78259E+02 |

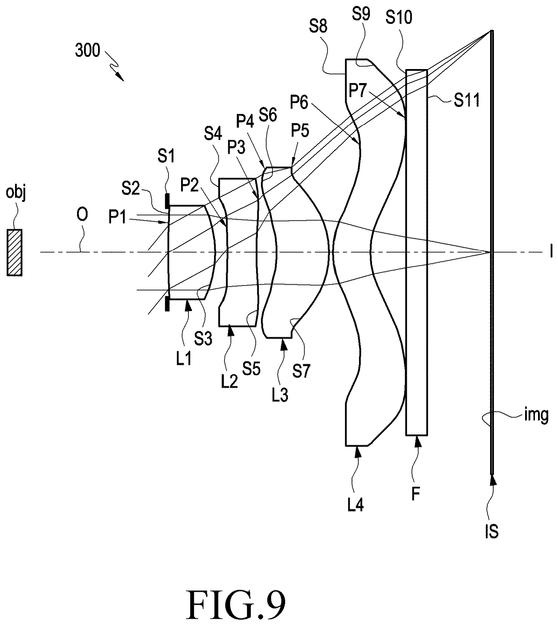

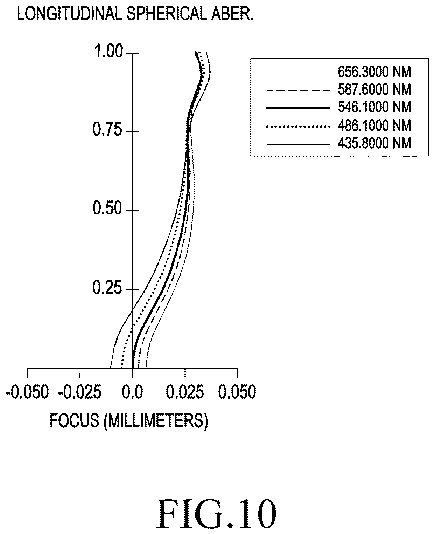

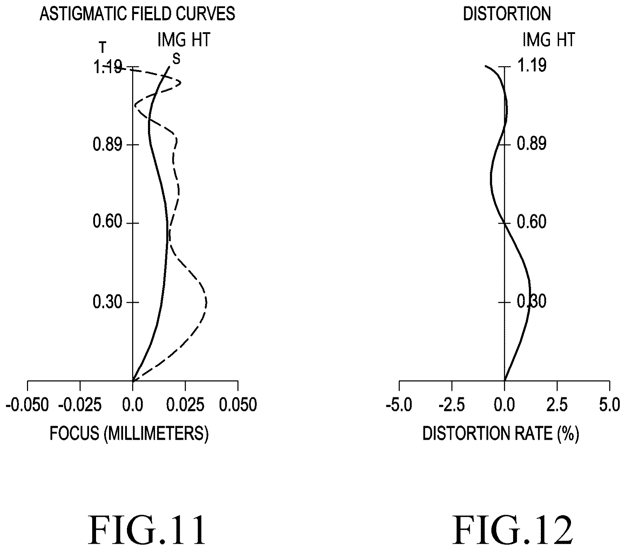

The longitudinal spherical aberration of FIG. 6 may be represented for light having wavelengths of approximately 656.3000nm, approximately 587.6000nm, approximately 546.1000nm, approximately 486.1000nm, and approximately 435.8000nm, respectively. The astigmatism of FIG. 7 may represent a result obtained for light having a wavelength of approximately 587.6000nm. The distortion of FIG. 8 may also represent a result obtained for light having a wavelength of approximately 587.6000nm. Referring to FIGS. 6 to 8, it may be identified that the lens assembly 200 has good spherical aberration, astigmatism, and distortion characteristics. FIG. 9 is a configuration diagram illustrating a lens assembly according to an embodiment of the disclosure. FIG. 10 is a graph illustrating spherical aberration of the lens assembly according to the embodiment of FIG. 9. FIG. 11 is a graph illustrating astigmatism of the lens assembly according to the embodiment of FIG. 9. FIG. 12 is a graph illustrating distortion of the lens assembly according to the embodiment of FIG. 9.

Referring to FIGS. 9 to 12 together, the lens assembly 300 may include four lenses (e.g., L1, L2, L3, and L4), the filter F, and the image sensor IS.

Like the lens assembly 100 according to the afore-described embodiment of FIGS. 1A to 4, the image-side surface S3 of the first lens L1 is convex toward the image side, and the object-side surface S4 of the second lens L2 is convex toward the object side in the lens assembly 300 according to the embodiment of FIGS. 9 to 12, by way of example. However, referring to FIG. 9, the lens assembly 300 may have a first inflection point P1 formed on the object-side surface S2 of the first lens L1, a second inflection point P2 formed on the object-side surface S4 of the second lens L2, a third inflection point P3 formed on the image-side surface S5 of the second lens L2, a fourth inflection point P4 formed on the object-side surface S6 of the third lens L3, a fifth inflection point P5 formed on the image-side surface S7 of the third lens L3, a sixth inflection point P6 formed on the object-side surface S8 of the fourth lens L4, and a seventh inflection point P7 formed on the image-side surface S9 of the fourth lens L4.

[Table 7] below may list various optical data for the four lenses (e.g., L1, L2, L3, and L4) and/or the filter F included in the lens assembly 300. 'obj' may represent an object, and 'img' may represent the image plane of the image sensor IS. 'S1' may represent the aperture stop sto, 'S2 to S11' may represent the surfaces of the related plurality of lenses (e.g., L1, L2, L3, and L4) and/or the filter F. y radius may represent the radius of curvature of a lens, Thickness may represent a lens thickness or air gap, Nd may represent the refractive index of a medium (e.g., the lens), and Vd may represent the Abbe number of the lens. When the lens assembly 300 has an F-number Fno of approximately 2.47, a field of view ANG of approximately 99.58 degrees, a focal length of approximately 1.0mm, and an ImgH of 1.19 for the image sensor IS, the lens assembly 300 may satisfy the above-described Formulas (and/or at least one of the above-described Formulas) while having the optical data listed in [Table 7] below.

Table 7]

| Lens surface | Lens surface type | Radius of curvature (y radius) | Thickness | Refractive index (Nd) | Abbe number (Vd) |
|---|---|---|---|---|---|
| obj | Sphere | infinity | 500 | | |
| S1(sto) | Sphere | infinity | 0.000 | | |
| S2 | Odd Polynomial | 3.586 | 0.255 | 1.544008 | 55.91 |
| S3 | Odd Polynomial | -0.884 | 0.058 | | |
| S4 | Odd Polynomial | 2.578 | 0.160 | 1.670733 | 19.2299 |
| S5 | Odd Polynomial | 1.263 | 0.111 | | |
| S6 | Odd Polynomial | -0.487 | 0.282 | 1.544008 | 55.91 |
| S7 | Odd Polynomial | -0.490 | 0.020 | | |
| S8 | Odd Polynomial | 0.372 | 0.206 | 1.544008 | 55.91 |
| S9 | Odd Polynomial | 0.388 | 0.195 | | |
| S10 | Sphere | infinity | 0.110 | 1.516798 | 64.1983 |
| S11 | Sphere | infinity | 0.340 | | |
| img | Sphere | infinity | 0.000 | | |

The refractive index data in [Table 7] may represent refractive indexes, for example, at a wavelength of 587.6000nm. [Table 8] and [Table 9] below may list the aspheric coefficients of the four lenses (e.g., L1, L2, L3, and L4) included in the lens assembly 300.

[Table 8]

| Lens surface | S2 | S3 | S4 | S5 |
|---|---|---|---|---|
| k | -9.89858E+01 | 1.94312E+00 | 1.77736E+01 | -9.34470E+01 |
| $A_4$ | -3.36543E+00 | -7.57759E+00 | -1.11722E+01 | 3.54110E+00 |
| $A_6$ | 2.81965E+02 | 3.04220E+01 | 1.35155E+02 | -1.92875E+02 |
| $A_8$ | -2.78025E+04 | 5.33654E+02 | -5.08979E+03 | 4.67434E+03 |
| $A_{10}$ | 1.41889E+06 | 1.79485E+03 | 1.58376E+05 | -7.97500E+04 |
| $A_{12}$ | -3.99944E+07 | -5.71910E+05 | -2.96693E+06 | 9.55993E+05 |
| $A_{14}$ | 5.82210E+08 | 1.29378E+07 | 3.36485E+07 | -7.78331E+06 |
| $A_{16}$ | -3.41556E+09 | -1.25555E+08 | -2.26157E+08 | 4.03825E+07 |
| $A_{18}$ | 0.00000E+00 | 4.67203E+08 | 8.03923E+08 | -1.19136E+07 |
| $A_{20}$ | 0.00000E+00 | 0.00000E+00 | -1.07995E+09 | 1.50997E+07 |
| $A_{22}$ | 0.00000E+00 | 0.00000E+00 | 0.00000E+00 | 0.00000E+00 |
| $A_{24}$ | 0.00000E+00 | 0.00000E+00 | 0.00000E+00 | 0.00000E+00 |
| $A_{26}$ | 0.00000E+00 | 0.00000E+00 | 0.00000E+00 | 0.00000E+00 |
| $A_{28}$ | 0.00000E+00 | 0.00000E+00 | 0.00000E+00 | 0.00000E+00 |
| $A_{30}$ | 0.00000E+00 | 0.00000E+00 | 0.00000E+00 | 0.00000E+00 |

## EP 4 738 858 A1

[Table 9]

| Lens surface | S6 | S7 | S8 | S9 |
|---|---|---|---|---|
| k | -6.66880E+00 | -2.88764E+00 | -2.13152E+00 | -1.66717E+00 |
| $A_4$ | 2.26225E+00 | -3.21042E+00 | -1.53550E+00 | 6.99048E-01 |
| $A_6$ | -5.35054E+01 | -3.57896E+01 | 7.02236E+00 | -4.05802E+01 |
| $A_8$ | 2.24583E+02 | 1.99915E+03 | -1.80439E+02 | 2.64425E+02 |
| $A_{10}$ | 7.44233E+03 | -5.19582E+04 | 3.64213E+02 | -5.79426E+02 |
| $A_{12}$ | -1.32103E+05 | 8.23137E+05 | 1.88278E+04 | -2.25195E+03 |
| $A_{14}$ | 1.04927E+06 | -8.36147E+06 | -2.32573E+05 | 2.20754E+04 |
| $A_{16}$ | -4.37080E+06 | 5.59307E+07 | 1.41722E+06 | -8.62345E+04 |
| $A_{18}$ | 8.66067E+06 | -2.45887E+08 | -5.42305E+06 | 2.10376E+05 |
| $A_{20}$ | -5.58211E+06 | 6.87772E+08 | 1.39714E+07 | -3.50629E+05 |
| $A_{22}$ | 0.00000E+00 | -1.11676E+09 | -2.46991E+07 | 4.07710E+05 |
| $A_{24}$ | 0.00000E+00 | 8.04989E+08 | 2.96313E+07 | -3.26537E+05 |
| $A_{26}$ | 0.00000E+00 | 0.00000E+00 | -2.30923E+07 | 1.71965E+05 |
| $A_{28}$ | 0.00000E+00 | 0.00000E+00 | 1.05556E+07 | -5.36148E+04 |
| $A_{30}$ | 0.00000E+00 | 0.00000E+00 | -2.14894E+06 | 7.49406E+03 |

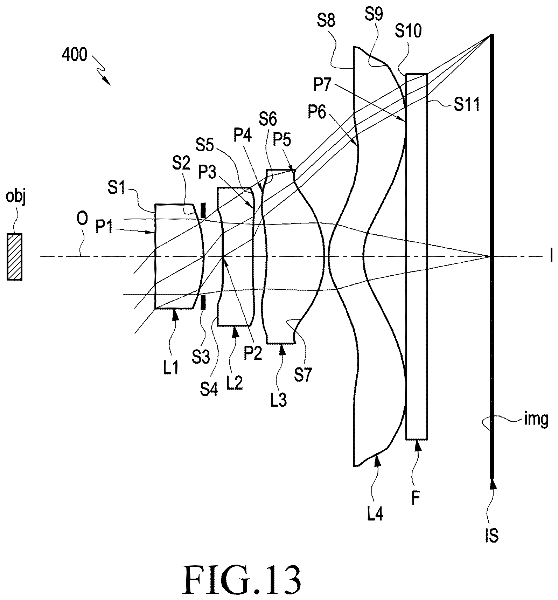

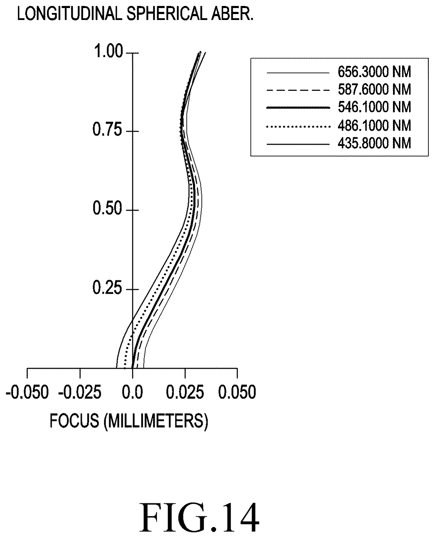

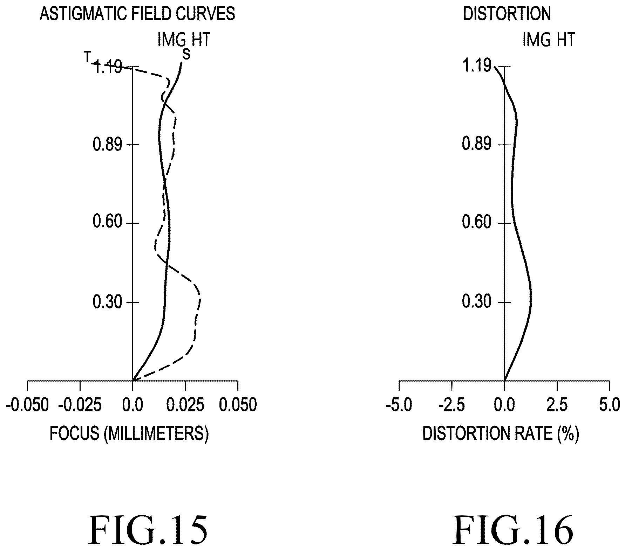

The longitudinal spherical aberration of FIG. 10 may be represented, for example, for light having wavelengths of approximately 656.3000nm, approximately 587.6000nm, approximately 546.1000nm, approximately 486.1000nm, and approximately 435.8000nm, respectively. The astigmatism of FIG. 11 may represent a result obtained for light having a wavelength of approximately 587.6000nm. The distortion of FIG. 12 may also represent a result obtained for light having a wavelength of approximately 587.6000nm. Referring to FIGS. 10 to 12, it may be identified that the lens assembly 300 has good spherical aberration, astigmatism, and distortion characteristics. FIG. 13 is a configuration diagram illustrating a lens assembly according to an embodiment of the disclosure. FIG. 14 is a graph illustrating spherical aberration of the lens assembly according to the embodiment of FIG. 13. FIG. 15 is a graph illustrating astigmatism of the lens assembly according to the embodiment of FIG. 13. FIG. 16 is a graph illustrating distortion of the lens assembly according to the embodiment of FIG. 13.

Referring to FIGS. 13 to 16 together, the lens assembly 400 may include four lenses (e.g., L1, L2, L3, and L4), the filter F, and the image sensor IS.

Like the lens assembly 100 according to the afore-described embodiment of FIGS. 1A to 4, the image-side surface S2 of the first lens L1 is convex toward the image side, and the object-side surface S4 of the second lens L2 is convex toward the object side in the lens assembly 400 according to the embodiment of FIGS. 13 to 16, by way of example. However, referring to FIG. 13, the lens assembly 400 may include an aperture stop S3 disposed between the first lens L1 and the second lens L2, and have a first inflection point P1 formed on the object-side surface S1 of the first lens L1, a second inflection point P2 formed on the object-side surface S4 of the second lens L2, a third inflection point P3 formed on the image-side surface S5 of the second lens L2, a fourth inflection point P4 formed on the object-side surface S6 of the third lens L3, a fifth inflection point P5 formed on the image-side surface S7 of the third lens L3, a sixth inflection point P6 formed on the object-side surface S8 of the fourth lens L4, and a seventh inflection point P7 formed on the image-side surface S9 of the fourth lens L4.

[Table 10] below may list various optical data for the four lenses (e.g., L1, L2, L3, and L4) and/or the filter F included in the lens assembly 400. 'obj' may represent an object, and 'img' may represent the image plane of the image sensor IS. 'S1 and S2, and S4 to S11' may represent the surfaces of the related plurality of lenses (e.g., L1, L2, L3, and L4) and/or the filter F. S3 may represent the aperture stop sto. y radius may represent the radius of curvature of a lens, Thickness may represent a lens thickness or air gap, Nd may represent the refractive index of a medium (e.g., the lens), and Vd may represent the Abbe number of the lens. When the lens assembly 400 has an F-number Fno of approximately 2.48, a field of view ANG of approximately 99.56 degrees, a focal length of approximately 0.99mm, and an ImgH of 1.19 for the image sensor IS, the lens assembly 400 may satisfy the above-described Formulas (and/or at least one of the above-described Formulas) while having the optical data listed in [Table 10] below.

Table 10]

| Lens surface | Lens surface type | Radius of curvature (y radius) | Thickness | Refractive index (Nd) | Abbe number (Vd) |
|---|---|---|---|---|---|
| obj | Sphere | infinity | 500 | | |
| S1 | Odd Polynomial | 6.42E+00 | 0.257 | 1.544008 | 55.91 |
| S2 | Odd Polynomial | -0.991 | 0.000 | | |
| S3(sto) | Sphere | infinity | 0.106 | | |
| S4 | Odd Polynomial | 10.568 | 0.160 | 1.670733 | 19.2299 |
| S5 | Odd Polynomial | 1.628 | 0.081 | | |
| S6 | Odd Polynomial | -0.767 | 0.315 | 1.544008 | 55.91 |
| S7 | Odd Polynomial | -0.680 | 0.020 | | |
| S8 | Odd Polynomial | 0.310 | 0.190 | 1.544008 | 55.91 |
| S9 | Odd Polynomial | 0.351 | 0.239 | | |
| S10 | Sphere | infinity | 0.110 | 1.516798 | 64.1983 |
| S11 | Sphere | infinity | 0.339 | | |
| img | Sphere | infinity | 0.000 | | |

The refractive index data in [Table 10] may represent refractive indexes, for example, at a wavelength of 587.6000nm. [Table 11] and [Table 12] below may list the aspheric coefficients of the four lenses (e.g., L1, L2, L3, and L4) included in the lens assembly 400.

Table 11]

| Lens surface | S1 | S2 | S4 | S5 |
|---|---|---|---|---|
| k | -9.90000E+01 | -1.82999E+01 | 9.90000E+01 | -9.90000E+01 |
| $A_4$ | -1.24275E+00 | -3.20323E+00 | -5.43294E+00 | 3.47579E+00 |
| $A_6$ | 2.16902E+01 | -5.16143E+02 | -1.16804E+02 | -2.41367E+02 |
| $A_8$ | -1.71457E+03 | 8.62831E+04 | 1.16477E+04 | 7.74956E+03 |
| $A_{10}$ | 5.13788E+04 | -8.84192E+06 | -5.68295E+05 | -1.63248E+05 |
| $A_{12}$ | -8.35349E+05 | 6.20337E+08 | 1.57037E+07 | 2.26956E+06 |
| $A_{14}$ | 6.91601E+06 | -3.13498E+10 | -2.61392E+08 | -2.06191E+07 |
| $A_{16}$ | -2.30613E+07 | 1.16912E+12 | 2.57516E+09 | 1.16985E+07 |
| $A_{18}$ | 0.00000E+00 | -3.23040E+13 | -1.38000E+10 | -3.75637E+07 |
| $A_{20}$ | 0.00000E+00 | 6.54796E+14 | 3.09968E+10 | 5.20471E+07 |
| $A_{22}$ | 0.00000E+00 | -9.53680E+15 | 0.00000E+00 | 0.00000E+00 |
| $A_{24}$ | 0.00000E+00 | 9.64900E+16 | 0.00000E+00 | 0.00000E+00 |
| $A_{26}$ | 0.00000E+00 | -6.40585E+17 | 0.00000E+00 | 0.00000E+00 |
| $A_{28}$ | 0.00000E+00 | 2.50002E+18 | 0.00000E+00 | 0.00000E+00 |
| $A_{30}$ | 0.00000E+00 | -4.33569E+18 | 0.00000E+00 | 0.00000E+00 |

[Table 12]

| Lens surface | S6 | S7 | S8 | S9 |
|---|---|---|---|---|
| k | -2.38180E+01 | -2.26558E+00 | -2.57523E+00 | -1.85931E+00 |
| $A_4$ | 2.64200E+00 | -6.54477E+00 | -1.64515E+00 | 4.81641E+00 |

(continued)

| Lens surface | S6 | S7 | S8 | S9 |
|---|---|---|---|---|
| $A_6$ | -7.65499E+01 | -2.21279E+01 | 4.48473E+01 | -1.26248E+02 |
| $A_8$ | 8.19505E+02 | 3.73641E+03 | -1.21980E+03 | 1.22524E+03 |
| $A_{10}$ | 7.62399E+03 | -1.10636E+05 | 1.51006E+04 | -7.35351E+03 |
| $A_{12}$ | -2.18207E+05 | 1.83878E+06 | -1.09456E+05 | 3.04716E+04 |
| $A_{14}$ | 1.92332E+06 | -1.92229E+07 | 5.24128E+05 | -9.12768E+04 |
| $A_{16}$ | -8.70403E+06 | 1.30758E+08 | -1.74657E+06 | 2.01937E+05 |
| $A_{18}$ | 2.05565E+07 | -5.76547E+08 | 4.15088E+06 | -3.32301E+05 |
| $A_{20}$ | -2.02341E+07 | 1.58937E+09 | -7.08837E+06 | 4.04976E+05 |
| $A_{22}$ | 0.00000E+00 | -2.49501E+09 | 8.63612E+06 | -3.59740E+05 |
| $A_{24}$ | 0.00000E+00 | 1.70849E+09 | -7.32690E+06 | 2.25791E+05 |
| $A_{26}$ | 0.00000E+00 | 0.00000E+00 | 4.11305E+06 | -9.46424E+04 |
| $A_{28}$ | 0.00000E+00 | 0.00000E+00 | -1.37327E+06 | 2.37167E+04 |
| $A_{30}$ | 0.00000E+00 | 0.00000E+00 | 2.06475E+05 | -2.68189E+03 |

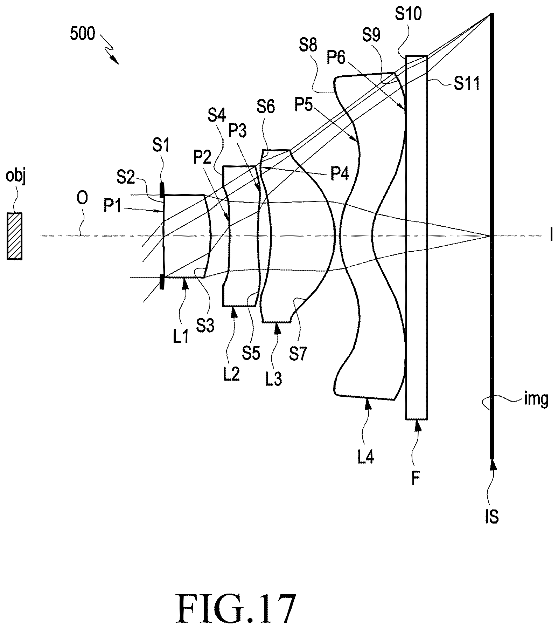

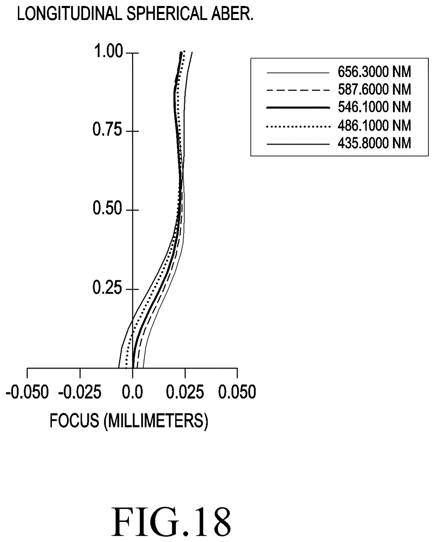

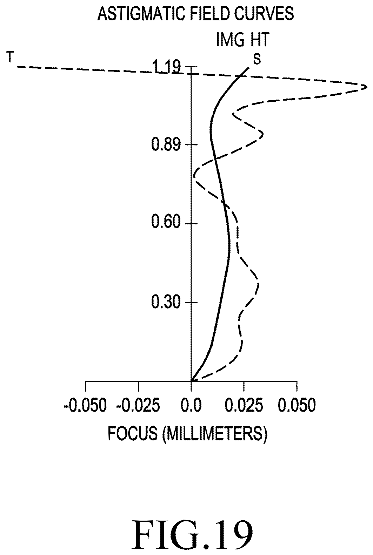

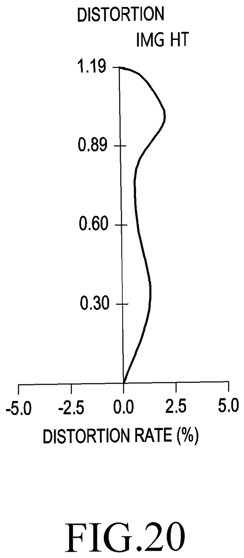

The longitudinal spherical aberration of FIG. 14 may be represented, for example, for light having wavelengths of approximately 656.3000nm, approximately 587.6000nm, approximately 546.1000nm, approximately 486.1000nm, and approximately 435.8000nm, respectively. The astigmatism of FIG. 15 may represent a result obtained for light having a wavelength of approximately 587.6000nm. The distortion of FIG. 16 may also represent a result obtained for light having a wavelength of approximately 587.6000nm. Referring to FIGS. 14 to 16, it may be identified that the lens assembly 400 has good spherical aberration, astigmatism, and distortion characteristics. FIG. 17 is a configuration diagram illustrating a lens assembly according to an embodiment of the disclosure. FIG. 18 is a graph illustrating spherical aberration of the lens assembly according to the embodiment of FIG. 17. FIG. 19 is a graph illustrating astigmatism of the lens assembly according to the embodiment of FIG. 17. FIG. 20 is a graph illustrating distortion of the lens assembly according to the embodiment of FIG. 17.

Referring to FIGS. 17 to 20 together, the lens assembly 500 may include four lenses (e.g., L1, L2, L3, and L4), the filter F, and the image sensor IS.

Like the lens assembly 100 according to the afore-described embodiment of FIGS. 1A to 4, the image-side surface S3 of the first lens L1 is convex toward the image side, and the object-side surface S4 of the second lens L2 is convex toward the object side in the lens assembly 500 according to the embodiment of FIGS. 17 to 20, by way of example. However, referring to FIG. 17, the lens assembly 500 may have a first inflection point P1 formed on the object-side surface S2 of the first lens L1, a second inflection point P2 formed on the object-side surface S4 of the second lens L2, a third inflection point P3 formed on the image-side surface S5 of the second lens L2, a fourth inflection point P4 formed on the object-side surface S6 of the third lens L3, a fifth inflection point P5 formed on the object-side surface S8 of the fourth lens L4, and a sixth inflection point P6 formed on the image-side surface S9 of the fourth lens L4.

[Table 13] below may list various optical data for the four lenses (e.g., L1, L2, L3, and L4) and/or the filter F included in the lens assembly 500. 'obj' may represent an object, and 'img' may represent the image plane of the image sensor IS. 'S1' may represent the aperture stop sto, and 'S2 to S11' may represent the surfaces of the related plurality of lenses (e.g., L1, L2, L3, and L4) and/or the filter F. y radius may represent the radius of curvature of a lens, Thickness may represent a lens thickness or air gap, Nd may represent the refractive index of a medium (e.g., the lens), and Vd may represent the Abbe number of the lens. When the lens assembly 500 has an F-number Fno of approximately 2.28, a field of view ANG of approximately 99.6 degrees, a focal length of approximately 0.99mm, and an ImgH of 1.19 for the image sensor IS, the lens assembly 500 may satisfy the above-described Formulas (and/or at least one of the above-described Formulas) while having the optical data listed in [Table 13] below.

Table 13]

| Lens surface | Lens surface type | Radius of curvature (y radius) | Thickness | Refractive index (Nd) | Abbe number (Vd) |
|---|---|---|---|---|---|
| obj | Sphere | infinity | 500 | | |

(continued)

| Lens surface | Lens surface type | Radius of curvature (y radius) | Thickness | Refractive index (Nd) | Abbe number (Vd) |
|---|---|---|---|---|---|
| S1(sto) | Sphere | infinity | 0.000 | | |
| S2 | Odd Polynomial | 2.866 | 0.256 | 1.544008 | 55.91 |
| S3 | Odd Polynomial | -0.996 | 0.098 | | |
| S4 | Odd Polynomial | 2.538 | 0.150 | 1.670733 | 19.2299 |
| S5 | Odd Polynomial | 0.967 | 0.074 | | |
| S6 | Odd Polynomial | -0.729 | 0.339 | 1.544008 | 55.91 |
| S7 | Odd Polynomial | -0.541 | 0.020 | | |
| S8 | Odd Polynomial | 0.319 | 0.180 | 1.544008 | 55.91 |
| S9 | Odd Polynomial | 0.307 | 0.183 | | |
| S10 | Sphere | infinity | 0.110 | 1.516798 | 64.1983 |
| S11 | Sphere | infinity | 0.340 | | |
| img | Sphere | infinity | 0.000 | | |

The refractive index data in [Table 13] may represent refractive indexes, for example, at a wavelength of 587.6000nm. [Table 14] and [Table 15] below may list the aspheric coefficients of the four lenses (e.g., L1, L2, L3, and L4) included in the lens assembly 500.

[Table 14]

| Lens surface | S2 | S3 | S4 | S5 |
|---|---|---|---|---|
| k | -3.74540E+01 | -4.04548E-01 | -7.82996E+01 | -6.49743E+01 |
| $A_4$ | -1.84431E+00 | -6.00893E+00 | -1.04332E+01 | 6.46736E+00 |
| $A_6$ | 3.12462E+00 | -8.10241E+01 | -9.33368E+01 | -5.95854E+02 |
| $A_8$ | -4.12189E+02 | 8.80895E+03 | 8.43168E+03 | 2.91273E+04 |
| $A_{10}$ | -8.60325E+03 | -3.70976E+05 | -3.14167E+05 | -1.15979E+06 |
| $A_{12}$ | 6.15269E+05 | 8.63903E+06 | 6.96270E+06 | 3.54384E+07 |
| $A_{14}$ | -1.17644E+07 | -1.15145E+08 | -9.60229E+07 | -7.95261E+08 |
| $A_{16}$ | 7.53501E+07 | 8.19137E+08 | 8.02452E+07 | 1.28987E+10 |
| $A_{18}$ | 0.00000E+00 | -2.40947E+09 | -3.72735E+07 | -1.50374E+11 |
| $A_{20}$ | 0.00000E+00 | 0.00000E+00 | 7.39953E+09 | 1.24925E+12 |
| $A_{22}$ | 0.00000E+00 | 0.00000E+00 | 0.00000E+00 | -7.25046E+12 |
| $A_{24}$ | 0.00000E+00 | 0.00000E+00 | 0.00000E+00 | 2.82729E+13 |
| $A_{26}$ | 0.00000E+00 | 0.00000E+00 | 0.00000E+00 | -6.88007E+13 |
| $A_{28}$ | 0.00000E+00 | 0.00000E+00 | 0.00000E+00 | 8.97747E+13 |
| $A_{30}$ | 0.00000E+00 | 0.00000E+00 | 0.00000E+00 | -4.19351E+13 |

[Table 15]

| Lens surface | S6 | S7 | S8 | S9 |
|---|---|---|---|---|
| k | -8.01627E+00 | -1.53016E+00 | -3.26407E+00 | -1.91987E+00 |
| $A_4$ | 4.98753E+00 | -7.90727E+00 | -1.16121E+00 | 2.05002E+00 |
| $A_6$ | -7.81341E+00 | 1.06778E+02 | 3.72070E+01 | -1.13177E+02 |

(continued)

| | | | | |
|---|---|---|---|---|
| $A_8$ | -9.89092E+03 | -5.00557E+02 | -1.55768E+03 | 1.31775E+03 |
| $A_{10}$ | 5.39812E+05 | -3.33917E+04 | 2.29989E+04 | -9.17294E+03 |
| $A_{12}$ | -1.80351E+07 | 1.20151E+06 | -1.95133E+05 | 4.41116E+04 |
| $A_{14}$ | 4.28996E+08 | -2.40113E+07 | 1.10229E+06 | -1.54039E+05 |
| $A_{16}$ | -7.35653E+09 | 3.37753E+08 | -4.42028E+06 | 3.97712E+05 |
| $A_{18}$ | 9.01769E+10 | -3.48165E+09 | 1.29619E+07 | -7.60776E+05 |
| $A_{20}$ | -7.82357E+11 | 2.62764E+10 | -2.80204E+07 | 1.06927E+06 |
| $A_{22}$ | 4.73980E+12 | -1.43012E+11 | 4.42138E+07 | -1.08445E+06 |
| $A_{24}$ | -1.95590E+13 | 5.45398E+11 | -4.94590E+07 | 7.68854E+05 |
| $A_{26}$ | 5.23275E+13 | -1.38116E+12 | 3.70638E+07 | -3.60292E+05 |
| $A_{28}$ | -8.17820E+13 | 2.08290E+12 | -1.66415E+07 | 9.99849E+04 |
| $A_{30}$ | 5.66657E+13 | -1.41304E+12 | 3.37603E+06 | -1.24148E+04 |

The longitudinal spherical aberration of FIG. 18 may be represented, for example, for light having wavelengths of approximately 656.3000 nanometers nm), approximately 587.6000nm, approximately 546.1000nm, approximately 486.1000nm, and approximately 435.8000nm, respectively. The astigmatism of FIG. 19 may represent a result obtained for light having a wavelength of approximately 587.6000nm. The distortion of FIG. 20 may also represent a result obtained for light having a wavelength of approximately 587.6000nm. Referring to FIGS. 18 to 20, it may be identified that the lens assembly 500 has good spherical aberration, astigmatism, and distortion characteristics. In the above-described embodiments, various data for the lenses and components around them may be identified in the lens assemblies (e.g., 100, 200, 300, 400 and 500) and the electronic device including the same. These data may satisfy the above-described conditions, for example, the results of [Formula 1 to Formula 6] as illustrated in [Table 16].

[Table 16]

| | Embodiment 1 | Embodiment 2 | Embodiment 3 | Embodiment 4 | Embodiment 5 |
|---|---|---|---|---|---|
| Formula 1 | 0.036 | 0.041 | 0.035 | 0.036 | 0.035 |
| Formula 2 | 95.9 | 86.6 | 99.6 | 99.6 | 99.6 |
| Formula 3 | 36.68 | 36.68 | 36.68 | 36.68 | 36.68 |
| Formula 4 | 1.544 | 1.544 | 1.544 | 1.544 | 1.544 |
| Formula 5 | 1.301 | 0.707 | 3.415 | 3.026 | 1.690 |
| Formula 6 | 1.453 | 1.493 | 1.458 | 1.525 | 1.468 |

In [Table 16] above, 'Embodiment 1' may refer to the lens assembly 100 illustrated in FIG. 1A, 'Embodiment 2' to the lens assembly 200 illustrated in FIG. 5, 'Embodiment 3' to the lens assembly 300 illustrated in FIG. 9, 'Embodiment 4' to the lens assembly 400 illustrated in FIG. 13, and 'Embodiment 5' to the lens assembly 500 illustrated in FIG. 17, respectively. The lens assemblies 100, 200, 300, 400, and 500 according to the various embodiments described above may be mounted and used in an electronic device (e.g., a laptop computer). The lens assemblies 100, 200, 300, 400, and 500 may be assembled with the image sensor IS into a single module (e.g., a camera module), and in the state of being assembled into the camera module, they may be mounted in the bezel of the electronic device. In addition to the image sensor IS, the electronic device (e.g., laptop computer) may further include an application processor (AP). Through the AP, for example, an operating system or application programs may be driven to control a plurality of hardware or software components connected to the AP, and various data processing and computations may be performed. For example, the AP may further include a graphic processing unit (GPU) and/or an image signal processor. When an image signal processor is included in the AP, an image (or video) obtained by the image sensor IS may be stored or output using the AP.

FIG. 21 is a block diagram illustrating an electronic device 2101 (e.g., an optical device) in a network environment 2100 according to various embodiments. Referring to FIG. 21, the electronic device 2101 (e.g., an optical device) in the network environment 2100 may communicate with an electronic device 2102 via a first network 2198 (e.g., a short-range wireless communication network), or at least one of an electronic device 2104 or a server 2108 via a second network 2199 (e.g., a long-range wireless communication network). According to an embodiment, the electronic device 2101 may communicate with the electronic device 2104 via the server 2108. According to an embodiment, the electronic device 2101 may include a processor 2120, memory 2130, an input module 2150, a sound output module 2155, a display module 2160, an audio module 2170, a sensor module 2176, an interface 2177, a connecting terminal 2178, a haptic module 2179, a camera module 2180, a power management module 2188, a battery 2189, a communication module 2190, a subscriber identification module (SIM) 2196, or an antenna module 2197. In some embodiments, at least one of the components (e.g., the connecting terminal 2178) may be omitted from the electronic device 2101, or one or more other components may be added in the electronic device 2101. In some embodiments, some of the components (e.g., the sensor module 2176, the camera module 2180, or the antenna module 2197) may be implemented as a single component (e.g., the display module 2160).

The processor 2120 may execute, for example, software (e.g., a program 2140) to control at least one other component (e.g., a hardware or software component) of the electronic device 2101 coupled with the processor 2120, and may perform various data processing or computation. According to one embodiment, as at least part of the data processing or computation, the processor 2120 may store a command or data received from another component (e.g., the sensor module 2176 or the communication module 2190) in volatile memory 2132, process the command or the data stored in the volatile memory 2132, and store resulting data in non-volatile memory 2134. According to an embodiment, the processor 2120 may include a main processor 2121 (e.g., a central processing unit (CPU) or an application processor (AP)), or an auxiliary processor 2123 (e.g., a graphics processing unit (GPU), a neural processing unit (NPU), an image signal processor (ISP), a sensor hub processor, or a communication processor (CP)) that is operable independently from, or in conjunction with, the main processor 2121. For example, when the electronic device 2101 includes the main processor 2121 and the auxiliary processor 2123, the auxiliary processor 2123 may be adapted to consume less power than the main processor 2121, or to be specific to a specified function. The auxiliary processor 2123 may be implemented as separate from, or as part of the main processor 2121.

The auxiliary processor 2123 may control at least some of functions or states related to at least one component (e.g., the display module 2160, the sensor module 2176, or the communication module 2190) among the components of the electronic device 2101, instead of the main processor 2121 while the main processor 2121 is in an inactive (e.g., sleep) state, or together with the main processor 2121 while the main processor 2121 is in an active state (e.g., executing an application). According to an embodiment, the auxiliary processor 2123 (e.g., an image signal processor or a communication processor) may be implemented as part of another component (e.g., the camera module 2180 or the communication module 2190) functionally related to the auxiliary processor 2123. According to an embodiment, the auxiliary processor 2123 (e.g., the neural processing unit) may include a hardware structure specified for artificial intelligence model processing. An artificial intelligence model may be generated by machine learning. Such learning may be performed, e.g., by the electronic device 2101 where the artificial intelligence is performed or via a separate server (e.g., the server 2108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2130 may store various data used by at least one component (e.g., the processor 2120 or the sensor module 2176) of the electronic device 2101. The various data may include, for example, software (e.g., the program 2140) and input data or output data for a command related thereto. The memory 2130 may include the volatile memory 2132 or the non-volatile memory 2134.

The program 2140 may be stored in the memory 2130 as software, and may include, for example, an operating system (OS) 2142, middleware 2144, or an application 2146.

The input module 2150 may receive a command or data to be used by another component (e.g., the processor 2120) of the electronic device 2101, from the outside (e.g., a user) of the electronic device 2101. The input module 2150 may include, for example, a microphone, a mouse, a keyboard, a key (e.g., a button), or a digital pen (e.g., a stylus pen).

The sound output module 2155 may output sound signals to the outside of the electronic device 2101. The sound output module 2155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2160 may visually provide information to the outside (e.g., a user) of the electronic device 2101. The display module 2160 may include, for example, a display, a hologram device, or a projector and control circuitry to control a corresponding one of the display, hologram device, and projector. According to an embodiment, the display module 2160 may include a touch sensor adapted to detect a touch, or a pressure sensor adapted to measure the intensity of force incurred by the touch.

The audio module 2170 may convert a sound into an electrical signal and vice versa. According to an embodiment, the audio module 2170 may obtain the sound via the input module 2150, or output the sound via the sound output module 2155 or a headphone of an external electronic device (e.g., an electronic device 2102) directly (e.g., wiredly) or wirelessly coupled with the electronic device 2101.

The sensor module 2176 may detect an operational state (e.g., power or temperature) of the electronic device 2101 or an environmental state (e.g., a state of a user) external to the electronic device 2101, and then generate an electrical signal or data value corresponding to the detected state. According to an embodiment, the sensor module 2176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2177 may support one or more specified protocols to be used for the electronic device 2101 to be coupled with the external electronic device (e.g., the electronic device 2102) directly (e.g., wiredly) or wirelessly. According to an embodiment, the interface 2177 may include, for example, a high definition multimedia interface (HDMI), a universal serial bus (USB) interface, a secure digital (SD) card interface, or an audio interface.

A connecting terminal 2178 may include a connector via which the electronic device 2101 may be physically connected with the external electronic device (e.g., the electronic device 2102). According to an embodiment, the connecting terminal 2178 may include, for example, a HDMI connector, a USB connector, a SD card connector, or an audio connector (e.g., a headphone connector).

The haptic module 2179 may convert an electrical signal into a mechanical stimulus (e.g., a vibration or a movement) or electrical stimulus which may be recognized by a user via his tactile sensation or kinesthetic sensation. According to an embodiment, the haptic module 2179 may include, for example, a motor, a piezoelectric element, or an electric stimulator.

The camera module 2180 may capture a still image or moving images. According to an embodiment, the camera module 2180 may include one or more lenses, image sensors, image signal processors, or flashes.

The power management module 2188 may manage power supplied to the electronic device 2101. According to one embodiment, the power management module 2188 may be implemented as at least part of, for example, a power management integrated circuit (PMIC).

The battery 2189 may supply power to at least one component of the electronic device 2101. According to an embodiment, the battery 2189 may include, for example, a primary cell which is not rechargeable, a secondary cell which is rechargeable, or a fuel cell.

The communication module 2190 may support establishing a direct (e.g., wired) communication channel or a wireless communication channel between the electronic device 2101 and the external electronic device (e.g., the electronic device 2102, the electronic device 2104, or the server 2108) and performing communication via the established communication channel. The communication module 2190 may include one or more communication processors that are operable independently from the processor 2120 (e.g., the application processor (AP)) and supports a direct (e.g., wired) communication or a wireless communication. According to an embodiment, the communication module 2190 may include a wireless communication module 2192 (e.g., a cellular communication module, a short-range wireless communication module, or a global navigation satellite system (GNSS) communication module) or a wired communication module 2194 (e.g., a local area network (LAN) communication module or a power line communication (PLC) module). A corresponding one of these communication modules may communicate with the external electronic device via the first network 2198 (e.g., a short-range communication network, such as Bluetooth™, wireless-fidelity (Wi-Fi) direct, or infrared data association (IrDA)) or the second network 2199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2192 may identify and authenticate the electronic device 2101 in a communication network, such as the first network 2198 or the second network 2199, using subscriber information (e.g., international mobile subscriber identity (IMSI)) stored in the subscriber identification module 2196.

The wireless communication module 2192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2192 may support a high-frequency band (e.g., the mmWave band) to achieve, e.g., a high data transmission rate. The wireless communication module 2192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2192 may support various requirements specified in the electronic device 2101, an external electronic device (e.g., the electronic device 2104), or a network system (e.g., the second network 2199). According to an embodiment, the wireless communication module 2192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 2197 may transmit or receive a signal or power to or from the outside (e.g., the external electronic device) of the electronic device 2101. According to an embodiment, the antenna module 2197 may include an antenna including a radiating element composed of a conductive material or a conductive pattern formed in or on a substrate (e.g., a printed circuit board (PCB)). According to an embodiment, the antenna module 2197 may include a plurality of antennas (e.g., array antennas). In such a case, at least one antenna appropriate for a communication scheme used in the communication network, such as the first network 2198 or the second network 2199, may be selected, for example, by the communication module 2190 (e.g., the wireless communication module 2192) from the plurality of antennas. The signal or the power may then be transmitted or received between the communication module 2190 and the external electronic device via the selected at least one antenna. According to an embodiment, another component (e.g., a radio frequency integrated circuit (RFIC)) other than the radiating element may be additionally formed as part of the antenna module 2197.

According to various embodiments, the antenna module 2197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2101 and the external electronic device 2104 via the server 2108 coupled with the second network 2199. Each of the electronic devices 2102 or 2104 may be a device of a same type as, or a different type, from the electronic device 2101. According to an embodiment, all or some of operations to be executed at the electronic device 2101 may be executed at one or more of the external electronic devices 2102, 2104, or 2108. For example, if the electronic device 2101 should perform a function or a service automatically, or in response to a request from a user or another device, the electronic device 2101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2101. The electronic device 2101 may provide the outcome, with or without further processing of the outcome, as at least part of a reply to the request. To that end, a cloud computing, distributed computing, mobile edge computing (MEC), or client-server computing technology may be used, for example.

The electronic device 2101 may provide ultra low-latency services using, e.g., distributed computing or mobile edge computing. In another embodiment, the external electronic device 2104 may include an internet-of-things (IoT) device. The server 2108 may be an intelligent server using machine learning and/or a neural network. According to an embodiment, the external electronic device 2104 or the server 2108 may be included in the second network 2199. The electronic device 2101 may be applied to intelligent services (e.g., smart home, smart city, smart car, or healthcare) based on 5G communication technology or IoT-related technology.

FIG. 22 is a block diagram 2200 illustrating a camera module 2280 according to various embodiments. Referring to FIG. 22, the camera module 2280 may include a lens assembly 2210 (e.g., the lens assembly 100 of FIG. 1A, the lens assembly 200 of FIG. 5, the lens assembly 300 of FIG. 9, the lens assembly 400 of FIG. 13, or the lens assembly 500 of FIG. 17), a flash 2220, an image sensor 2230 (e.g., the image sensor IS in FIG. 1A, FIG. 6, and FIG. 10), an image stabilizer 2240, memory 2250 (e.g., buffer memory) (e.g., the memory 2130 of FIG. 21), or an image signal processor 2260. The lens assembly 2210 may collect light emitted or reflected from an object whose image is to be taken. The lens assembly 2210 may include one or more lenses. According to an embodiment, the camera module 2280 may include a plurality of lens assemblies 2210. In such a case, the camera module 2180 may form, for example, a dual camera, a 360-degree camera, or a spherical camera. Some of the plurality of lens assemblies 2210 may have the same lens attribute (e.g., view angle, focal length, auto-focusing, F-number (Fno), or optical zoom), or at least one lens assembly may have one or more lens attributes different from those of another lens assembly. The lens assembly 2210 may include, for example, a wide-angle lens or a telephoto lens.

The flash 2220 may emit light that is used to reinforce light reflected from an object. According to an embodiment, the flash 2220 may include one or more light emitting diodes (LEDs) (e.g., a red-green-blue (RGB) LED, a white LED, an infrared (IR) LED, or an ultraviolet (UV) LED) or a xenon lamp. The image sensor 2230 may obtain an image corresponding to an object by converting light emitted or reflected from the object and transmitted via the lens assembly 2210 into an electrical signal. According to an embodiment, the image sensor 2230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 2230 may be implemented using, for example, a charged coupled device (CCD) sensor or a complementary metal oxide semiconductor (CMOS) sensor.

The image stabilizer 2240 may move the image sensor 2230 or at least one lens included in the lens assembly 2210 in a particular direction, or control an operational attribute (e.g., adjust the read-out timing) of the image sensor 2230 in response to the movement of the camera module 2280 or the electronic device 2101 including the camera module 2280. This allows compensating for at least part of a negative effect (e.g., image blurring) by the movement on an image being captured. According to an embodiment, the image stabilizer 2240 may sense such a movement by the camera module 2280 or the electronic device 2101 using a gyro sensor (not shown) or an acceleration sensor (not shown) disposed inside or outside the camera module 2280. According to an embodiment, the image stabilizer 2240 may be implemented, for example, as an optical image stabilizer. The memory 2250 may store, at least temporarily, at least part of an image obtained via the image sensor 2230 for a subsequent image processing task. For example, if image capturing is delayed due to shutter lag or multiple images are quickly captured, a raw image obtained (e.g., a Bayer-patterned image, a high-resolution image) may be stored in the memory 2250, and its corresponding copy image (e.g., a low-resolution image) may be previewed via the display module 2160. Thereafter, if a specified condition is met (e.g., by a user's input or system command), at least part of the raw image stored in the memory 2250 may be obtained and processed, for example, by the image signal processor 2260. According to an embodiment, the memory 2250 may be configured as at least part of the memory 2130 or as a separate memory that is operated independently from the memory 2130.

The image signal processor 2260 may perform one or more image processing with respect to an image obtained via the image sensor 2230 or an image stored in the memory 2250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 2260 may perform control (e.g., exposure time control or read-out timing control) with respect to at least one (e.g., the image sensor 2230) of the components included in the camera module 2280. An image processed by the image signal processor 2260 may be stored back in the memory 2250 for further processing, or may be provided to an external component (e.g., the memory 2130, the display module 2160, the electronic device 2102, the electronic device 2104, or the server 2108) outside the camera module 2280. According to an embodiment, the image signal processor 2260 may be configured as at least part of the processor 2120, or as a separate processor that is operated independently from the processor 2120. If the image signal processor 2260 is configured as a separate processor from the processor 2120, at least one image processed by the image signal processor 2260 may be displayed, by the processor 2120, via the display module 2160 as it is or after being further processed.

According to an embodiment, the electronic device 2101 may include a plurality of camera modules 2280 having different attributes or functions. In such a case, at least one of the plurality of camera modules 2280 may form, for example, a wide-angle camera and at least another of the plurality of camera modules 2280 may form a telephoto camera. Similarly, at least one of the plurality of camera modules 2280 may form, for example, a front camera and at least another of the plurality of camera modules 2280 may form a rear camera.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2140) including one or more instructions that are stored in a storage medium (e.g., internal memory 2136 or external memory 2138) that is readable by a machine (e.g., the electronic device 2101). For example, a processor (e.g., the processor 2120) of the machine (e.g., the electronic device 2101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure. The electronic device 2101 may be provided. The electronic device 2101 may include the lens assembly 100, 200, 300, 400, or 500 including the first lens L1, the second lens L2, the third lens L3, and the fourth lens L4, which are disposed along an optical axis direction from an object side toward an image side, and the image sensor IS disposed to receive light focused or guided by the lens assembly. The first lens L1 may have a positive refractive power, the second lens L2 may have a negative refractive power, the third lens L3 may have a positive refractive power, and at least one of an object-side surface or an image-side surface of the second lens L2 may have an inflection point. The electronic device may satisfy the following [Formula 1] and [Formula 2].

$$[\text{Formula 1}]$$

$$0.03 \leq \frac{\text{OAL}}{\text{HFoV}} \leq 0.045$$

$$[\text{Formula 2}]$$

$$80 \leq \text{FoV} \leq 110$$

(where 'OAL' is a distance from an object-side surface of the first lens to an image plane, HFoV is a half field of view of an optical system including the lens assembly, and FoV is a field of view of the optical system including the lens assembly).

According to an embodiment, the electronic device may satisfy the following [Formula 3].

$$[\text{Formula 3}]$$

$$32 \leq \text{Vd}_1 - \text{Vd}_2 \leq 39$$

(where 'Vd1' is an Abbe number of the first lens, and 'Vd2' is an Abbe number of the second lens).

According to an embodiment, the image-side surface of the second lens has an inflective shape in which a chief portion thereof adjacent to an optical axis is concave toward the image side, and a marginal portion thereof is convex toward the image side.

According to an embodiment, the object-side surface of the second lens may be convex toward the object side.

According to an embodiment, an object-side surface of the first lens may be convex toward the object side, and an image-side surface of the first lens may be convex or concave toward the image side.

According to an embodiment, the third lens has a meniscus shape in which an object-side surface and an image-side surface are convex toward the image side.

According to an embodiment, an aperture stop may be disposed at a position adjacent to the object-side surface or the image-side surface of the first lens.

According to an embodiment, the electronic device may satisfy the following [Formula 4].

$$[\text{Formula 4}]$$

$$1.5 \leq \text{nd}_3 \leq 1.65$$

(where 'nd3' is a d-line refractive index of the third lens).

According to an embodiment, the electronic device may satisfy the following [Formula 5].

$$[\text{Formula 5}]$$

$$0.6 \leq \frac{f_3}{f_1} \leq 4.5$$

(where 'f1' is a focal length of the first lens, and 'f3' is a focal length of the third lens).

According to an embodiment, the fourth lens has a meniscus shape in which an object-side surface and an image-side surface are convex toward the object side.

According to an embodiment, each of the object-side surface and the image-side surface of the fourth lens may have an inflective shape where radii of curvature of a chief portion adjacent to the optical axis and a marginal portion have opposite signs.

According to an embodiment, the electronic device may satisfy the following [Formula 6].

$$[\text{Formula 6}]$$

$$1.3 \leq \frac{\text{OAL}}{\text{IH}} \leq 1.6$$

(where 'OAL' is the distance from the object-side surface of the first lens to the image plane, and 'IH' is a maximum height of the image plane).

According to an embodiment, the electronic device may be a laptop computer.

According to an embodiment, the first lens, the second lens, the third lens, and the fourth lens may be made of plastic aspheric lenses.

According to an embodiment, the distance from the object-side surface of the first lens to the image plane may be less than or equal to approximately 1.8mm.

According to an embodiment of the disclosure. The electronic device 2101 may be provided. The electronic device 2101 may include a display, a bezel structure surrounding at least a portion of the display, and a camera module disposed in the bezel structure. The camera module may include the lens assembly 100, 200, 300, 400, or 500 including the first lens L1, the second lens L2, the third lens L3, and the fourth lens L4, which are disposed along an optical axis direction from an object side toward an image side, and the image sensor IS disposed to receive light focused or guided by the lens assembly. The first lens L1 may have a positive refractive power, the second lens L2 may have a negative refractive power, the third lens L3 may have a positive refractive power, at least one of an object-side surface or an image-side surface of the second lens L2 may have an inflection point, the image-side surface of the second lens may have an inflective shape in which a chief portion adjacent to an optical axis is concave and a marginal portion is convex, the third lens may have a meniscus shape in which an object-side surface and an image-side surface are convex toward the image side, and the fourth lens may have a meniscus shape in which an object-side surface and an image-side surface are convex toward the object side. The electronic device may satisfy the following [Formula 1] and [Formula 2].

[Formula 1]

$$0.03 \leq \frac{OAL}{HFoV} \leq 0.045$$

[Formula 2]

$$80 \leq FoV \leq 110$$

(where 'OAL' is a distance from an object-side surface of the first lens to an image plane, HFoV is a half field of view of an optical system including the lens assembly, and FoV is a field of view of the optical system including the lens assembly).

According to an embodiment, the electronic device may satisfy the following [Formula 3].

[Formula 3]

$$32 \leq Vd_1 - Vd_2 \leq 39$$

(where 'Vd1' is an Abbe number of the first lens, and 'Vd2' is an Abbe number of the second lens).

According to an embodiment, the electronic device may satisfy the following [Formula 4].

[Formula 4]

$$1.5 \leq nd_3 \leq 1.65$$

(where 'nd3' is a d-line refractive index of the third lens).

According to an embodiment, the electronic device may satisfy the following [Formula 5].

[Formula 5]

$$0.6 \leq \frac{f_3}{f_1} \leq 4.5$$

(where 'f1' is a focal length of the first lens, and 'f3' is a focal length of the third lens).

According to an embodiment, the electronic device may satisfy the following [Formula 6].

[Formula 6]

$$1.3 \leq \frac{OAL}{IH} \leq 1.6$$

(where 'OAL' is the distance from the object-side surface of the first lens to the image plane, and 'IH' is a maximum height of the image plane).

While specific embodiments have been described in the detailed description of various embodiments of the disclosure, it will be apparent to those skilled in the art that various modifications may be made without departing from the scope of the disclosure. For example, the gap, width, and dimensions of all or each of four lenses in the disclosure may be appropriately set according to the structure and required specifications of a lens assembly to be actually manufactured, or a camera and/or an electronic device in which the lens assembly is to be mounted, as well as an actual environment of use.

The effects obtainable in the disclosure are not limited to the effects mentioned above, and other effects not mentioned will be clearly understood by those skilled in the art.

**Claims**

1. An electronic device (2101) comprising:

a lens assembly (100; 200; 300; 400; 500) including a first lens (L1), a second lens (L2), a third lens (L3), and a fourth lens (L4), which are disposed along an optical axis direction from an object side toward an image side; and
an image sensor (IS) disposed to receive light focused or guided by the lens assembly,
wherein the first lens (L1) has a positive refractive power, the second lens (L2) has a negative refractive power, and the third lens (L3) has a positive refractive power,
wherein at least one of an object-side surface or an image-side surface of the second lens (L2) has an inflection point, and
wherein the electronic device satisfies the following [Formula 1] and [Formula 2],

[Formula 1]

$$0.03 \leq \frac{OAL}{HFoV} \leq 0.045$$

[Formula 2]

$$80 \leq FoV \leq 110$$

where 'OAL' is a distance from an object-side surface of the first lens to an image plane, HFoV is a half field of view of an optical system including the lens assembly, and FoV is a field of view of the optical system including the lens assembly.

2. The electronic device of claim 1, wherein the electronic device satisfies the following [Formula 3],

[Formula 3]

$$32 \leq Vd_1 - Vd_2 \leq 39$$

where 'Vd1' is an Abbe number of the first lens, and 'Vd2' is an Abbe number of the second lens.

3. The electronic device of claim 1 or 2, wherein the image-side surface of the second lens has an inflective shape in which a chief portion thereof adjacent to an optical axis is concave toward the image side, and a marginal portion thereof is convex toward the image side.

4. The electronic device of claim 3, wherein the object-side surface of the second lens is convex toward the object side.

5. The electronic device of any one of claims 1 to 4, wherein an object-side surface of the first lens is convex toward the object side, and an image-side surface of the first lens is convex or concave toward the image side.

6. The electronic device of any one of claims 1 to 5, wherein the third lens has a meniscus shape in which an object-side surface and an image-side surface are convex toward the image side.

7. The electronic device of any one of claims 1 to 6, wherein an aperture stop is disposed at a position adjacent to the object-side surface or the image-side surface of the first lens.

8. The electronic device of any one of claims 1 to 7, wherein the electronic device satisfies the following [Formula 4],

[Formula 4]

$$1.5 \leq nd_3 \leq 1.65$$

where 'nd3' is a d-line refractive index of the third lens.

9. The electronic device of any one of claims 1 to 8, wherein the electronic device satisfies the following [Formula 5],

[Formula 5]

$$0.6 \leq \frac{f_3}{f_1} \leq 4.5$$

where 'f1' is a focal length of the first lens, and 'f3' is a focal length of the third lens.

10. The electronic device of any one of claims 1 to 9, wherein the fourth lens has a meniscus shape in which an object-side surface and an image-side surface are convex toward the object side.

11. The electronic device of any one of claims 1 to 10, wherein each of the object-side surface and the image-side surface of the fourth lens has an inflective shape where radii of curvature of a chief portion adjacent to the optical axis and a marginal portion have opposite signs.

12. The electronic device of any one of claims 1 to 11, wherein the electronic device satisfies the following [Formula 6],

[Formula 6]

$$1.3 \leq \frac{OAL}{IH} \leq 1.6$$

where 'OAL' is the distance from the object-side surface of the first lens to the image plane, and 'IH' is a maximum height of the image plane.

13. The electronic device of any one of claims 1 to 12, wherein the electronic device is a laptop computer.

14. The electronic device of any one of claims 1 to 13, wherein the first lens, the second lens, the third lens, and the fourth lens are made of plastic aspheric lenses.

15. The electronic device of any one of claims 1 to 14, wherein the distance from the object-side surface of the first lens to the image plane is less than or equal to approximately 1.8mm.

FIG.1A

FIG.1B

LONGITUDINAL SPHERICAL ABER.

FIG.2

ASTIGMATIC FIELD CURVES
IMG HT

T    S
1.19

0.89

0.60

0.30

-0.050  -0.025   0.0   0.025   0.050
FOCUS (MILLIMETERS)

FIG.3

DISTORTION
IMG HT

1.19

0.89

0.60

0.30

-5.0   -2.5   0.0   2.5   5.0
DISTORTION RATE (%)

FIG.4

FIG.5

LONGITUDINAL SPHERICAL ABER.

FIG.6

ASTIGMATIC FIELD CURVES

IMG HT

DISTORTION

IMG HT

FOCUS (MILLIMETERS)

DISTORTION RATE (%)

FIG.7

FIG.8

FIG.9

LONGITUDINAL SPHERICAL ABER.

FIG.10

ASTIGMATIC FIELD CURVES

T          IMG HT
            S
1.19

0.89

0.60

0.30

-0.050  -0.025   0.0   0.025   0.050
FOCUS (MILLIMETERS)

FIG.11

DISTORTION

IMG HT
1.19

0.89

0.60

0.30

-5.0   -2.5   0.0   2.5   5.0
DISTORTION RATE (%)

FIG.12

FIG.13

LONGITUDINAL SPHERICAL ABER.

| | 656.3000 NM |
| | 587.6000 NM |
| | 546.1000 NM |
| | 486.1000 NM |
| | 435.8000 NM |

FOCUS (MILLIMETERS)

FIG.14

ASTIGMATIC FIELD CURVES

IMG HT

FIG.15

DISTORTION

IMG HT

FIG.16

FIG.17

LONGITUDINAL SPHERICAL ABER.

| | 656.3000 NM |
| | 587.6000 NM |
| | 546.1000 NM |
| | 486.1000 NM |
| | 435.8000 NM |

FOCUS (MILLIMETERS)

# FIG.18

ASTIGMATIC FIELD CURVES

FIG.19

FIG.20

FIG.21

EP 4 738 858 A1

_2200_

_2280_

CAMERA MODULE

_2220_

FLASH

_2210_

LENS
ASSEMBLY

_2230_

IMAGE SENSOR

_2240_

IMAGE STABILIZER

_2250_

MEMORY

_2260_

IMAGE
SIGNAL
PROCESSOR

# FIG.22

## INTERNATIONAL SEARCH REPORT

| International application No. |
| --- |
| **PCT/KR2024/010958** |

| A. | CLASSIFICATION OF SUBJECT MATTER |
| --- | --- |

**H04N 23/55**(2023.01)i; **H04N 23/54**(2023.01)i; **H04N 23/57**(2023.01)i; **G03B 17/12**(2006.01)i; **G03B 30/00**(2021.01)i; **G03B 9/02**(2006.01)i; **G02B 13/00**(2006.01)i; **G02B 3/00**(2006.01)i; **G02B 1/04**(2006.01)i

According to International Patent Classification (IPC) or to both national classification and IPC

| B. | FIELDS SEARCHED |
| --- | --- |

Minimum documentation searched (classification system followed by classification symbols)

H04N 23/55(2023.01); G02B 13/00(2006.01); G02B 13/04(2006.01); G02B 13/18(2006.01); G02B 9/62(2006.01); G03B 17/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복수의 렌즈 어셈블리(a plurality of lens assemblies), 이미지 센서(image sensor), 정 굴절력(positive refraction power), 부 굴절력(negative refraction power), 피사체(object), 결상면(image plane), 거리 (distance), 반화각(half field angle)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-0407422 B1 (DIOSTECH CO., LTD.) 28 November 2003 (2003-11-28)<br>See page 3, lines 23-28; claim 1; and figure 1. | 1-15 |
| A | JP 2023-000974 A (YOUNG OPTICS INC.) 04 January 2023 (2023-01-04)<br>See claims 1 and 7. | 1-15 |
| A | KR 10-1823210 B1 (SAMSUNG ELECTRO-MECHANICS CO., LTD.) 29 January 2018 (2018-01-29)<br>See paragraphs [0013]-[0031] and [0054]-[0055]; and figure 1. | 1-15 |
| A | KR 10-2020-0017404 A (PANASONIC INTELLECTUAL PROPERTY MANAGEMENT CO., LTD.) 18 February 2020 (2020-02-18)<br>See paragraph [0007]; and figure 1. | 1-15 |
| A | CN 112666676 A (MIND ELECTRONICS APPLIANCE CO., LTD.) 16 April 2021 (2021-04-16)<br>See claims 1, 3 and 9; and figure 1. | 1-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 October 2024** | **24 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/010958**

| Patent document cited in search report | | | Publication date (day/month/year) | Patent family member(s) | | | Publication date (day/month/year) |
|---|---|---|---|---|---|---|---|
| KR | 10-0407422 | B1 | 28 November 2003 | None | | | |
| JP | 2023-000974 | A | 04 January 2023 | CN | 115494686 | A | 20 December 2022 |
| | | | | TW | 202300979 | A | 01 January 2023 |
| | | | | TW | I814018 | B | 01 September 2023 |
| KR | 10-1823210 | B1 | 29 January 2018 | CN | 106918898 | A | 04 July 2017 |
| | | | | CN | 106918898 | B | 10 March 2020 |
| | | | | CN | 111175939 | A | 19 May 2020 |
| | | | | CN | 111175939 | B | 09 August 2022 |
| | | | | KR | 10-2017-0077359 | A | 06 July 2017 |
| | | | | US | 10054768 | B2 | 21 August 2018 |
| | | | | US | 10591703 | B2 | 17 March 2020 |
| | | | | US | 11442252 | B2 | 13 September 2022 |
| | | | | US | 11885941 | B2 | 30 January 2024 |
| | | | | US | 2017-0184817 | A1 | 29 June 2017 |
| | | | | US | 2018-0329182 | A1 | 15 November 2018 |
| | | | | US | 2020-0174229 | A1 | 04 June 2020 |
| | | | | US | 2022-0382022 | A1 | 01 December 2022 |
| | | | | US | 2024-0126049 | A1 | 18 April 2024 |
| KR | 10-2020-0017404 | A | 18 February 2020 | CN | 110730920 | A | 24 January 2020 |
| | | | | CN | 110730920 | B | 10 May 2022 |
| | | | | EP | 3640700 | A1 | 22 April 2020 |
| | | | | JP | 2019-230034 | A1 | 21 November 2019 |
| | | | | JP | 2020-024439 | A | 13 February 2020 |
| | | | | JP | 6607426 | B2 | 20 November 2019 |
| | | | | JP | 7108934 | B2 | 29 July 2022 |
| | | | | US | 11327278 | B2 | 10 May 2022 |
| | | | | US | 2020-0116982 | A1 | 16 April 2020 |
| | | | | WO | 2018-230034 | A1 | 20 December 2018 |
| CN | 112666676 | A | 16 April 2021 | None | | | |

Form PCT/ISA/210 (patent family annex) (July 2022)